# EUROPÄISCHE PATENTSCHRIFT

(11) **EP 2 206 820 B1**
(45) Veröffentlichungstag und Bekanntmachung des Hinweises auf die Patenterteilung: **05.06.2013**
(21) Anmeldenummer: 09177470.3
(22) Anmeldetag: 30.11.2009
(51) Int. Cl.: D05B 65/00

(54) **Fadenschneidvorrichtung**
Thread cutting device
Dispositif à couper le fil

(30) Priorität: 09.01.2009 DE 102009004220
(43) Veröffentlichungstag der Anmeldung: 14.07.2010
(73) Patentinhaber: Dürkopp Adler AG, 33719 Bielefeld (DE)
(72) Erfinder: Römich, Samuel, 33647 Bielefeld (DE)
(74) Vertreter: Rau, Albrecht

(56) Entgegenhaltungen:
- DE-A1- 3 208 159
- DE-A1-102007 045 599
- DE-C1- 19 722 395
- DE-U1-202009 000 251
- US-A- 3 648 634
- US-A- 5 009 177
- US-A- 5 647 290

## Beschreibung

Die Erfindung betrifft eine Fadenschneidvorrichtung für eine Nähmaschine nach dem Oberbegriff des Anspruchs 1. Ferner betrifft die Erfindung eine Nähmaschine mit einer derartigen Fadenschneidvorrichtung.

Eine Fadenschneidvorrichtung der eingangs genannten Art ist durch offenkundige Vorbenutzung bekannt. Weitere Fadenschneidvorrichtungen sind bekannt aus der Firmenschrift der Dürkopp Adler AG: 767 Spezialnähmaschine, Serviceanleitung Ausgabe 10/2008 und aus der DE 10 2007 045 599 A1.

Es ist eine Aufgabe der vorliegenden Erfindung, eine Betriebsicherheit der Fadenklemmung zu verbessern.

Diese Aufgabe ist erfindungsgemäß gelöst durch eine Fadenschneidvorrichtung mit den im Anspruch 1 angegebenen Merkmalen.

Das erfindungsgemäße Einstellelement gewährleistet eine Anpassung des Klemmdrucks der Fadenklemme. Der Klemmdruck kann insbesondere an Nähparameter und an Fadenparameter des zu klemmenden Fadens angepasst werden. Das Gegenmesser kann insbesondere an einem Greiferbock der Nähmaschine festgelegt sein. Bei einer Verstellung des Greiferbocks erfolgt dann automatisch eine Mitverstellung des Gegenmessers, so dass keine Neuausrichtung des Gegenmessers erfolgen muss. Mit dem Einstellelement kann der Klemmdruck innerhalb eines vorgegebenen Bereichs vorgegeben werden. Beim erfindungsgemäßen Einstellelement kann die Notwendigkeit entfallen, die Fadenklemme während der Einstellung von einem Klemmenträger zu lösen.

Eine Ausgestaltung der Fadenklemme und des Einstellelements nach Anspruch 2 ermöglicht eine besonders einfache Klemmdruckeinstellung.

Dies gilt insbesondere für die Ausgestaltung des Einstellelements nach Anspruch 3. Eine selbstsichernde Schraube nach Anspruch 4 macht eine zusätzliche Sicherung der Schraube entbehrlich.

Ein Fadenziehmesser nach Anspruch 5 hat sich in der Praxis bewährt. Die Fadenschneidvorrichtung kann zum Schneiden mindestens eines Oberfadens und/oder zum Schneiden mindestens eines Unterfadens der Nähmaschine herangezogen werden.

Die Vorteile einer Nähmaschine nach Anspruch 6 entsprechen denen, die vorstehend unter Bezugnahme auf die erfindungsgemäße Fadenschneidvorrichtung bereits erläutert wurden. Bei der Nähmaschine kann es sich um eine Ein-Nadel-Nähmaschine, um eine Zwei-Nadel-Nähmaschine oder auch um eine eine größere Anzahl von Nadeln aufweisende Mehrnadel-Nähmaschine handeln.

Ein Ausführungsbeispiel der Erfindung wird nachfolgend anhand der Zeichnungen näher erläutert. In dieser zeigen:
- Fig. 1: eine bedienerseitige Ansicht einer Zwei-Nadel-Nähmaschine, wobei ein Maschinentisch zur Sichtbarmachung von in der Grundplatte untergebrachten Details weggelassen ist;
- Fig. 2: eine perspektivische Ansicht der Zwei-Nadel-Nähmaschine nach Figur 1;
- Fig. 3: aus der Blickrichtung nach Figur 1 und vergrößert eine Nadelstangen-Schaltbaugruppe der Nähmaschine, wobei beide Nadelstangen im oberen Totpunkt und in einem eingeschalteten Nähbetriebs-Zustand vorliegen;
- Fig. 4: eine Ansicht der Nadelstangen-Schaltbaugruppe aus Blickrichtung IV in Figur 3;
- Fig. 5: eine Ansicht der Nadelstangen-Schaltbaugruppe aus Blickrichtung V in Figur 4;
- Fig. 6: in einer zu Figur 3 ähnlichen Darstellung die Baugruppe mit eingeschalteter linker Nadelstange im Bereich eines unteren Totpunktes und ausgeschalteter rechter Nadelstange;
- Fig. 7: in einer zu Figur 4 ähnlichen Darstellung die Baugruppe im Schaltzustand nach Figur 6;
- Fig. 8: in einer zu Figur 6 ähnlichen Darstellung die Baugruppe, bei der die Nadelstangen in einer Stellung nach Durchführung einer Nadeltransport-Schwenkbewegung dargestellt sind und wobei im Vergleich zu Figur 6 einige Komponenten der Baugruppe weggelassen sind;
- Fig. 9: in einer zu Figur 7 ähnlichen Darstellung die Baugruppe in der Nadeltransportstellung nach Figur 8;
- Fig. 10: eine Ausschnittsvergrößerung im Bereich X. in Figur 9;
- Fig. 11: in einer zu Figur 8 ähnlichen Darstellung die Baugruppe nach Durchführung der Nadeltransport-Schwenkbewegung;
- Fig. 12: in einer zu Figur 7 ähnlichen Darstellung die Baugruppe in der Nadeltransportstellung nach Figur 11;
- Fig. 13: eine Ausschnittsvergrößerung im Bereich XIII. in Figur 12;
- Fig. 14: in einer zu Figur 4 ähnlichen Darstellung, allerdings unter Weglassung einiger Komponenten und im Bereich einer Schubwelle gebrochen und teilweise im Schnitt die Nadelstangen-Schaltbaugruppe;
- Fig. 15: vergrößert den Ausschnitt XV. in Figur 14;
- Fig. 16: eine Ansicht der Baugruppe gemäß Blickrichtung XVI. in Figur 14;
- Fig. 17: perspektivisch eine Hebelverbindung einer Nadelstangen-Transportvorrichtung der Nähmaschine in einer Transportstellung einer Zugstange;
- Fig. 18: eine Seitenansicht der Hebelverbindung nach Figur 17, gesehen aus einer Blickrichtung parallel zu einer Längsachse der Schubwelle;
- Fig. 19: einen Schnitt gemäß Linie XIX-XIX in Figur 18;
- Fig. 20: in einer zu Figur 17 ähnlichen Darstellung die Hebelverbindung, wobei die Zugstange in einer Neutralstellung gezeigt ist;
- Fig. 21: die Hebelverbindung in der Stellung nach Figur 20 in einer zu Figur 18 ähnlichen Darstellung;
- Fig. 22: einen Schnitt gemäß Linie XXII-XXII in Figur 21;
- Fig. 23: in einer zu Figur 20 ähnlichen Darstellung die Hebelverbindung mit gelöster Feststellschraube eines Nadeltransporthebels der Hebelverbindung;
- Fig. 24: in einer zu Figur 21 ähnlichen Darstellung die Hebelverbindung in der Stellung nach Figur 23;
- Fig. 25: perspektivisch eine Greiferantriebs-Baugruppe der Nähmaschine;
- Fig. 26: perspektivisch eine Wellenanordnung der Greiferantriebs-Baugruppe;
- Fig. 27: eine Seitenansicht der Wellenanordnung nach Figur 26;
- Fig. 28: einen axialen Längsschnitt durch die Wellenanordnung gemäß Linie XXVIII-XXVIII in Figur 27;
- Fig. 29: den Detailausschnitt XXIX in Figur 28;
- Fig. 30: einen Schnitt gemäß Linie XXX-XXX in Figur 27;
- Fig. 31: einen Schnitt gemäß Linie XXXI-XXXI in Figur 27;
- Fig. 32: in einer zu Figur 31 ähnlichen Darstellung die Wellenanordnung in einer ersten Randposition einer Schwenkverstellung einer Hohlwelle zur Einstellung eines Schleifenhubes;
- Fig. 33: in einer zu Figur 31 ähnlichen Darstellung die Wellenanordnung in einer gegenüberliegenden Randposition einer Schwenkverstellung einer Hohlwelle zur Einstellung eines Schleifenhubes;
- Fig. 34: einen Schnitt gemäß Linie XXXIV-XXXIV in Figur 30;
- Fig. 35: den Detailausschnitt XXXV in Figur 34;
- Fig. 36: perspektivisch eine Fadenabschneider-Baugruppe der Nähmaschine;
- Fig. 37: eine Aufsicht auf die Fadenabschneider-Baugruppe, im Bereich einer Schneidkraft-Einstellschraube gebrochen;
- Fig. 38: eine Seitenansicht der Fadenabschneider-Baugruppe gemäß Blickrichtung XXXVIII in Figur 37;
- Fig. 39: vergrößert einen Ausschnitt der Fadenabschneider-Baugruppe im Bereich einer Messeranordnung aus einer zu Figur 38 ähn- lichen Blickrichtung in einer Position eines Fadenziehmessers relativ zu einem Gegenmesser nach einem Fadenabschneiden;
- Fig. 40: den Detailausschnitt XL in Figur 39;
- Fig. 41: eine interne Details im Bereich der Schneidkraft-Einstellschraube preisgebende Ansicht ähnlich zur Figur 39;
- Fig. 42: eine Aufsicht auf die Messeranordnung in der Relativposition nach Figur 39;
- Fig. 43: perspektivisch die Messeranordnung der FadenabschneiderBaugruppe in einer Relativposition des Fadenziehmessers zum Gegenmesser vor dem Fadenabschneiden;
- Fig. 44: in einer zu Figur 39 ähnlichen Darstellung die Messeranordnung in der Relativposition nach Figur 43;
- Fig. 45: das Detail XLV in Figur 44;
- Fig. 46: in einer zu Figur 42 ähnlichen Darstellung die Messeranordnung in der Relativposition nach Figur 43;
- Fig. 47: perspektivisch eine Ansicht auf einen Ausschnitt der Messeranordnung mit Blickrichtung auf die Schneidkraft-Einstellschraube;
- Fig. 48: die Messeranordnung in einer Relativposition des Fadenziehmessers zum Gegenmesser bei einer Schneidkrafteinstellung;
- Fig. 49: in einer zu Figur 44 ähnlichen Darstellung die Messeranordnung in der Relativposition nach Figur 48;
- Fig. 50: das Detail L in Figur 49;
- Fig. 51: in einer zu Figur 46 ähnlichen Ansicht die Messeranordnung in der Relativposition nach Figur 48;
- Fig. 52: in einer zu Figur 47 ähnlichen Darstellung die Anordnung in der Relativposition nach Figur 48;
- Fig. 53: die Messeranordnung in der Relativposition nach Figur 39 perspektivisch gesehen mit Blickrichtung schräg von unten auf eine Unterfadenklemme, wobei das Gegenmesser weggelassen ist;
- Fig. 54: in einer zu Figur 39 ähnlichen Darstellung die Messeranordnung mit über eine Klemmkraft-Einstellschraube vorgespannter Fadenklemme;
- Fig. 55: eine Ansicht gemäß Blickrichtung LV in Figur 54 in einer den Blick auf die Klemmkraft-Einstellschraube freigebenden gebrochenen Darstellung;

- Fig. 56: die Messeranordnung in einer Fadenklemmkraft-Einstell-Relativposition des Fadenziehmessers zum Gegenmesser und zur Unterfadenklemme;
- Fig. 57: in einer zu Figur 54 ähnlichen Darstellung die Messeranordnung in der Relativposition nach Figur 56;
- Fig. 58: in einer zu Figur 55 ähnlichen Darstellung die Messeranordnung mit der Klemmkraft-Einstellschraube in Eingriff mit der Fadenklemme;
- Fig. 59: eine Ausschnittsvergrößerung aus Figur 58 im Bereich der Unterfadenklemme;
- Fig. 60: perspektivisch einen Ausschnitt der Grundplatte gesehen schräg von oben im Bereich einer Stichplatte und zweier an diese angrenzender Stichplattenschieber;
- Fig. 61: eine Aufsicht auf den Grundplattenabschnitt nach Figur 60;
- Fig. 62: einen Schnitt gemäß Linie LXII-LXII in Figur 61;
- Fig. 63: das Detail LXIII in Figur 62 in einer Sicherungsstellung, in der der in der Figur 61 rechts dargestellte Stichplattenschieber gegen eine Relativverlagerung relativ zur Grundplatte gesichert ist;
- Fig. 64: das Detail nach Figur 63 in einer Freigabestellung, in der eine Relativverlagerung des Stichplattenschiebers relativ zur Grundplatte ermöglicht ist;
- Fig. 65: einen Schnitt gemäß Linie LXV-LXV in Figur 61; und
- Fig. 66: das Detail LXVI in Figur 65.

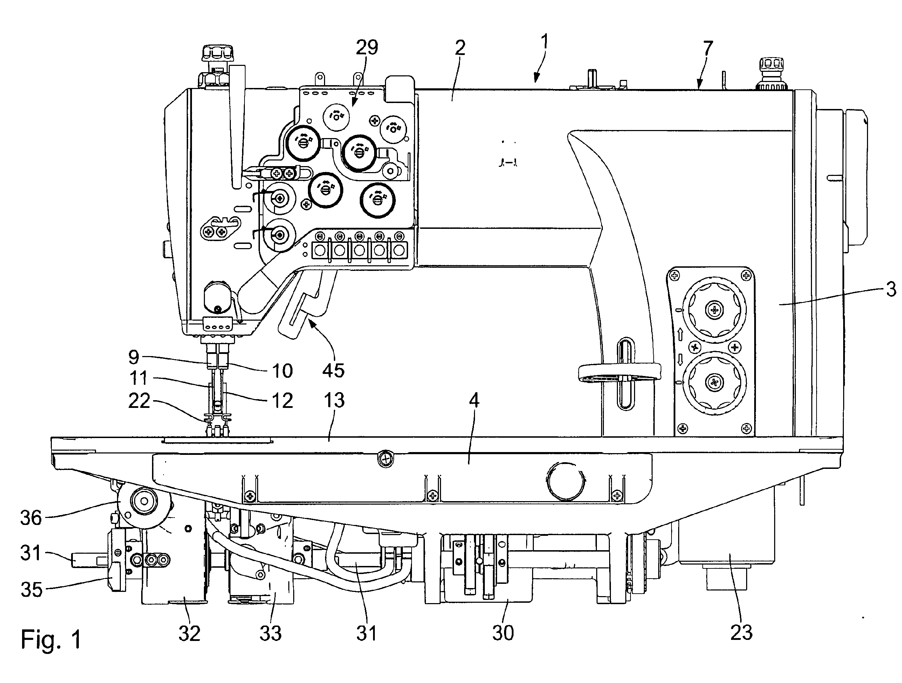

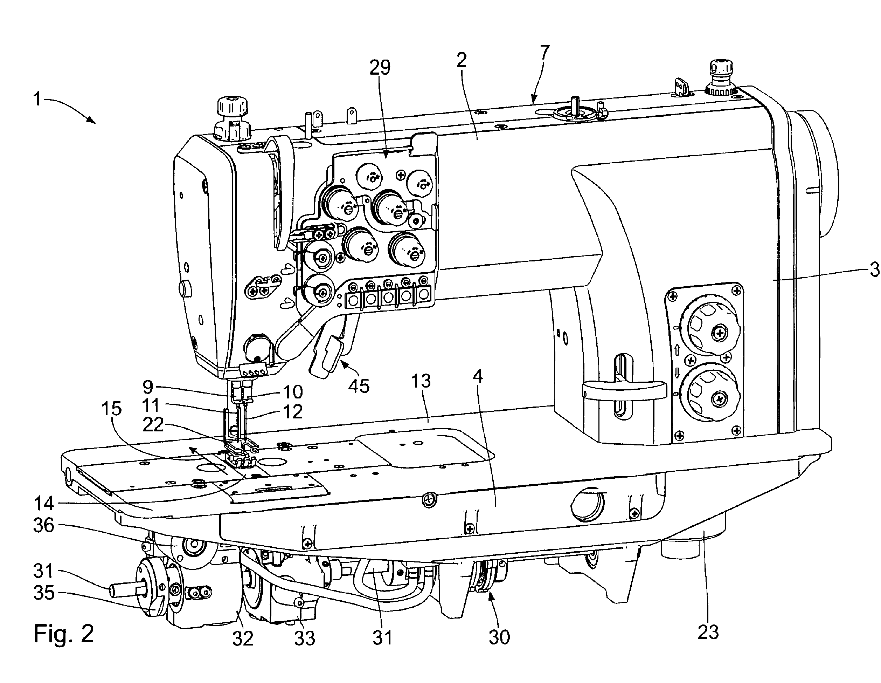

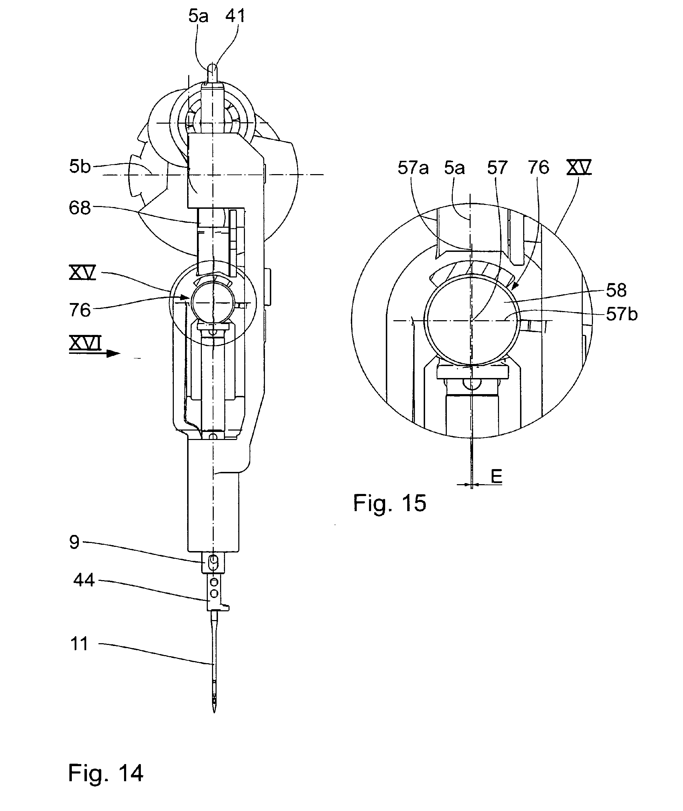

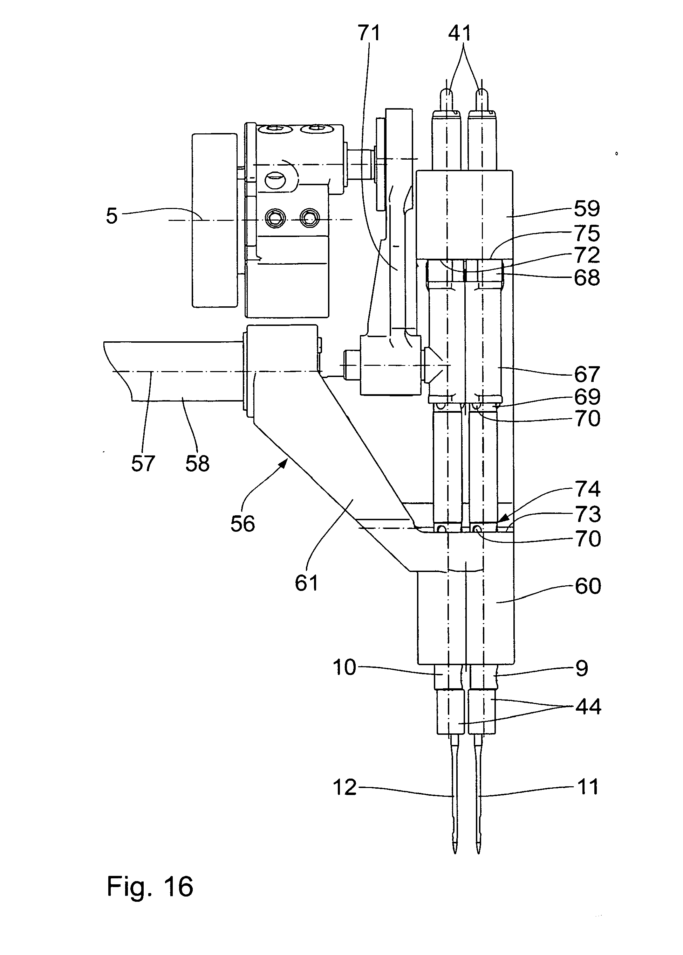

Eine mit ihren Hauptkomponenten in den Figuren 1 und 2 dargestellte Zwei-Nadel-Nähmaschine 1 hat einen oberen Arm 2, einen vertikalen Ständer 3 und ein unteres Gehäuse in Form einer Grundplatte 4. Im Arm 2 ist eine Armwelle drehbar gelagert, deren Armwellenachse 5 in den Figuren 14 und 16 eingezeichnet ist. In der Figur 14 ergibt sich die Armwellenachse 5 als Schnittpunkt zweier Hilfslinien 5a und 5b.

Ein Gehäuse 7 der Nähmaschine 1 und die Grundplatte 4 sind Teil eines Rahmens der Nähmaschine 1.

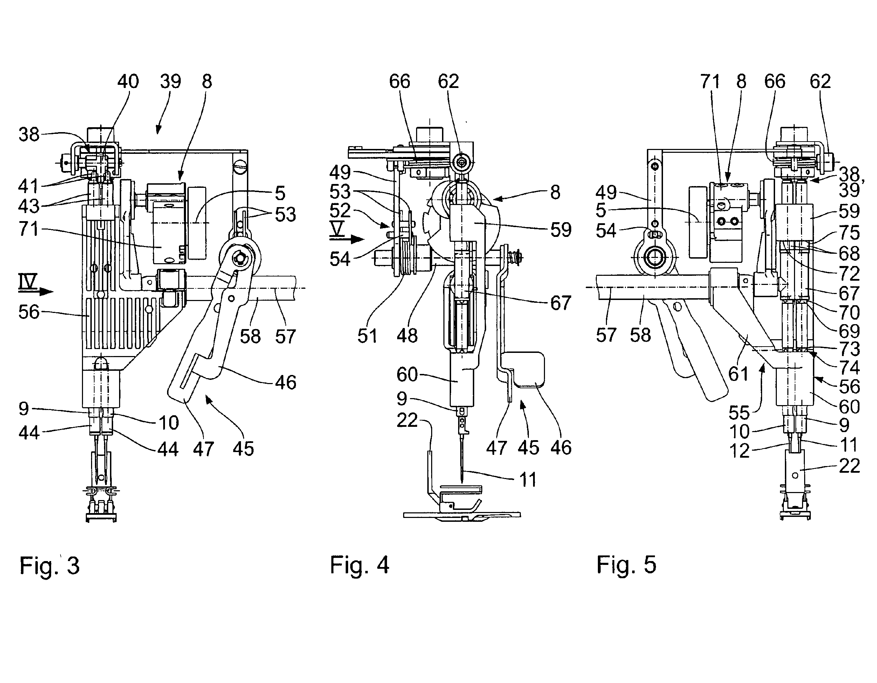

Ein Antrieb der Armwelle und damit der wesentlichen Nähkomponenten der Nähmaschine 1 erfolgt über einen im Arm 2 montierten Antriebsmotor. Weitere Nähkomponenten werden über einen in der Zeichnung nicht näher dargestellten Riemenantrieb angetrieben. Über die Armwelle und eine in den Figuren 3 bis 6 noch näher dargestellte Antriebseinrichtung in Form eines Kurbelantriebs 8 sind zwei Nadelstangen 9, 10 vertikal auf- und abgehend antreibbar. Die in der Figur 1 links dargestellte Nadelstange wird nachfolgend mit der Bezugsziffer 9 und die in der Figur 1 rechts dargestellte Nadelstange wird nachfolgend mit der Bezugsziffer 10 bezeichnet. Die Nadelstangen 9, 10 tragen jeweils eine Nadel 11, 12. Die Nadelstangen 9, 10 bilden eine Nadel-Aufnahmeeinheit für die beiden Nadeln 11, 12. Anstelle zweier Nadelstangen 9, 10 kann bei einer nicht dargestellten Ausführung der Nähmaschine 1 auch eine einzige Nadel-Aufnahmeeinheit vorgesehen sein, die beide Nadeln 11, 12 aufnimmt.

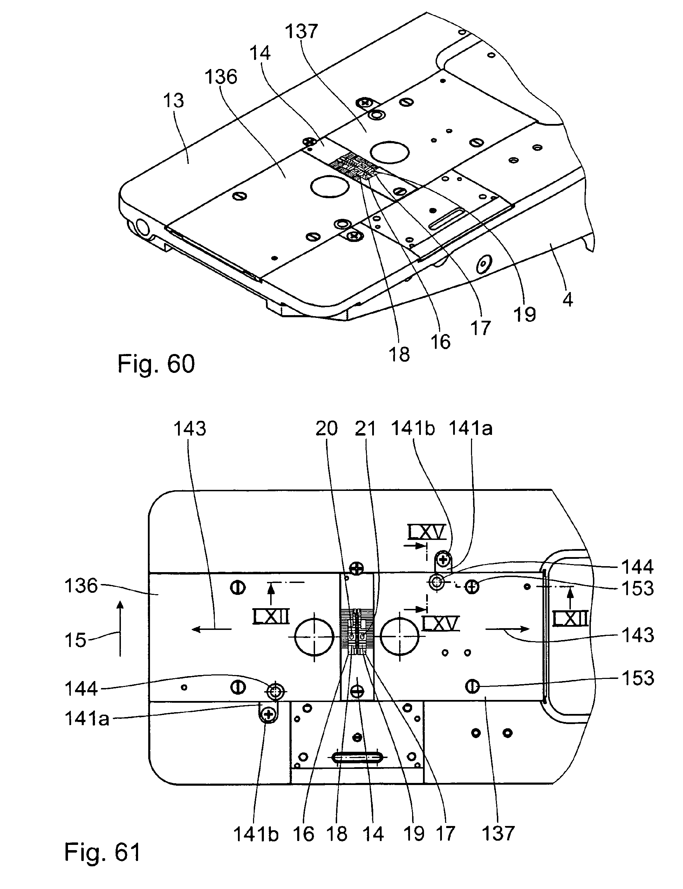

Unterhalb der Nadelstangen 9, 10 ist in einer oberen Auflageplatte 13 der Grundplatte 4 eine Stichplatte 14 angeordnet und mit der Auflageplatte 13 verschraubt. Die Stichplatte 14 ist in den Figuren 60 und 61 näher dargestellt. Die Stichplatte 14 hat zwei längs einer Nährichtung 15 (vergleiche Figuren 2 und 61) länglich verlaufende Stoffschieber-Öffnungen 16, 17, die für den Durchtritt eines dem Untertransport von Nähgut dienenden Stoffschiebers mit zwei Stoffschieberabschnitten 18, 19 dienen. Die Stoffschieberabschnitte 18, 19 haben jeweils ein Stichloch 20, 21 zum Durchtritt der jeweils zugeordneten Nadel 11, 12.

Von oben her wird das Nähgut mit Hilfe eines Drückerfußes 22 während des Nähvorgangs gehalten. Über einen Magnetantrieb 23 (vergleiche Figur 1) ist eine magnetische Lüftung des Drückerfußes 22 möglich.

Zum Vorschieben des Nähguts zwischen der Stichplatte 14 und dem Drückerfuß 22 während des Nähvorgangs dienen wahlweise die Stoffschieberabschnitte 18, 19 oder die in das Nähgut einstechenden Nadeln 11, 12 selbst. Die Nähmaschine 1 kann also wahlweise mit einem Untertransport oder mit einem Nadeltransport betrieben werden.

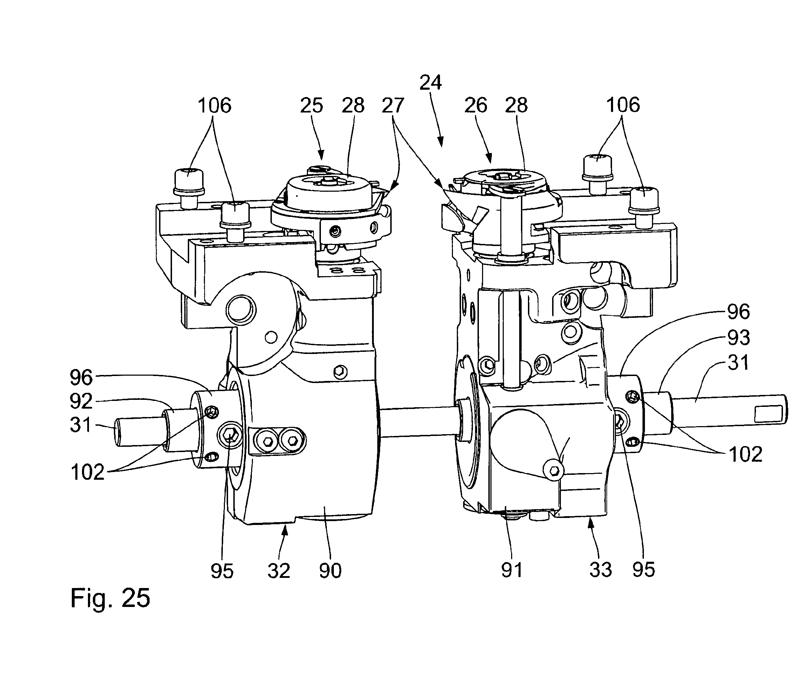

Unterhalb der Stichplatte 14 ist in der Grundplatte 4 eine Greifer-Baugruppe 24 angeordnet, die insgesamt und mit weit voneinander beabstandeten Greifern 25, 26 in der Figur 25 dargestellt ist. Eine Abstandsvariation zwischen den Greifern 25, 26 und damit zwischen den mit den Nadeln 11, 12 und den zugeordneten Greifern 25, 26 genähten Nähten ist bei der Nähmaschine 1 im Bereich zwischen einigen und einigen zehn Millimetern möglich.

Die Greiferspitzen 27 der Greifer 25, 26 wirken zur Stichbildung synchron mit der Bewegung der Nadeln 11, 12 zusammen, wobei über die Nadelbewegung eine Schleife eines nicht dargestellten Oberfadens gebildet wird, in die die Greiferspitzen 27 eingreifen.

Die Greifer 25, 26 sind als sich um vertikale und zueinander parallele Achsen drehende Greifer ausgebildet und weisen jeweils ein Nadelvorratsgehäuse 28 für einen Vorrat eines Unterfadens auf, der in Form einer Bobbine bereitgestellt ist. Bei der Stichbildung wird jeweils einer der beiden von den Greifern 25, 26 zur Verfügung gestellten Unterfäden mit einem der von den beiden Nadeln 11, 12 bereitgestellten Oberfäden verknotet.

Die beiden Oberfäden werden von in der Zeichnung nicht dargestellten Spulen bereitgestellt und über eine Oberfaden-Spanneinrichtung 29 (vergleiche Figuren 1 und 2), die auf einer Montageplatte des Arms 2 montiert ist, definiert und einstellbar gespannt.

Zum Antrieb des Stoffschiebers mit den Stoffschieberabschnitten 18, 19 dient ein Stichstellergetriebe 30, das in der Fig. 1 im Bereich der Grundplatte 4 sichtbar ist. Ein Drehantrieb der Greifer 25, 26 erfolgt über eine Unterwelle 31 sowie über Umlenkgetriebe, die jeweils in einem den Greifern 25, 26 zugeordneten Greiferantriebsgehäuse 32, 33 untergebracht sind.

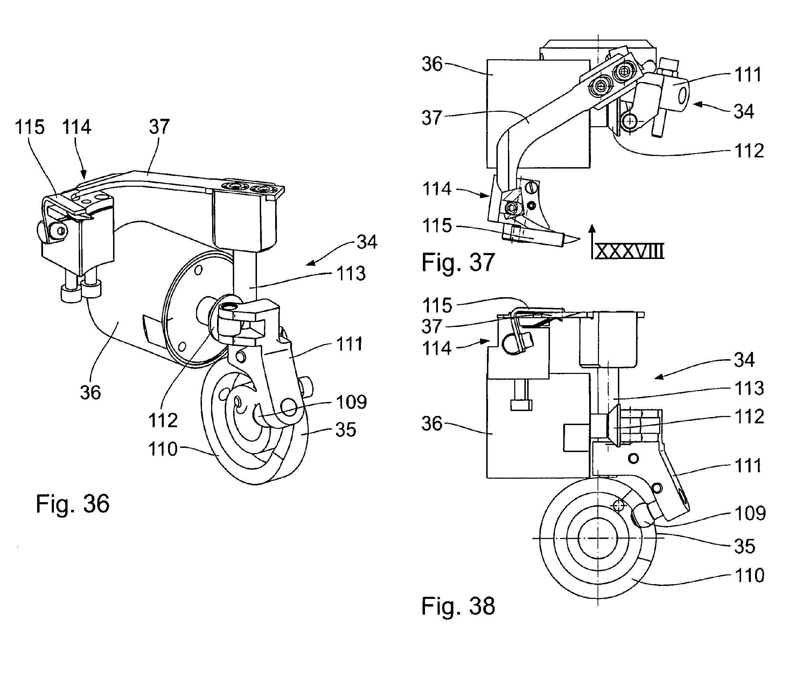

Zum Abschneiden der Ober- und Unterfäden dienen zwei Fadenabschneider-Baugruppen, von denen eine Fadenschneider-Baugruppe 34 insgesamt in der Figur 36 dargestellt ist und von der in den Figuren 1 und 2 ein Schneidkurvenkörper 35 sichtbar ist, die über einen Hubmagneten 36 zur Betätigung eines Fadenziehmessers 37 (vergleiche Figur 36) zuschaltbar ist. Der Schneidkurvenkörper 35 ist drehfest mit der Unterwelle 31 verbunden.

Jeweils eine der beiden Fadenabschneider-Baugruppen 34 ist zum Abschneiden eines einander zugeordneten Paares aus einem Oberfaden und einem Unterfaden zuständig.

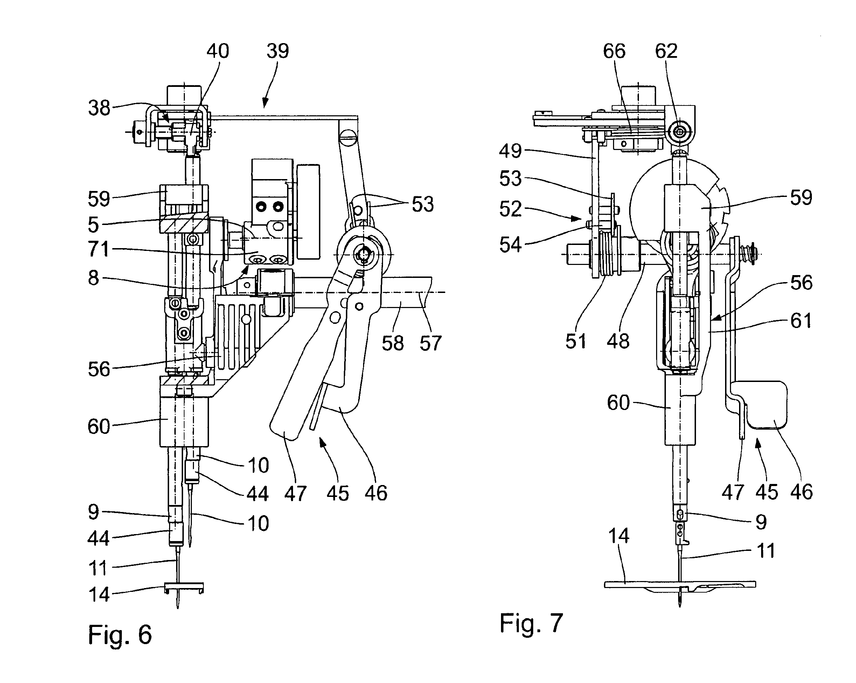

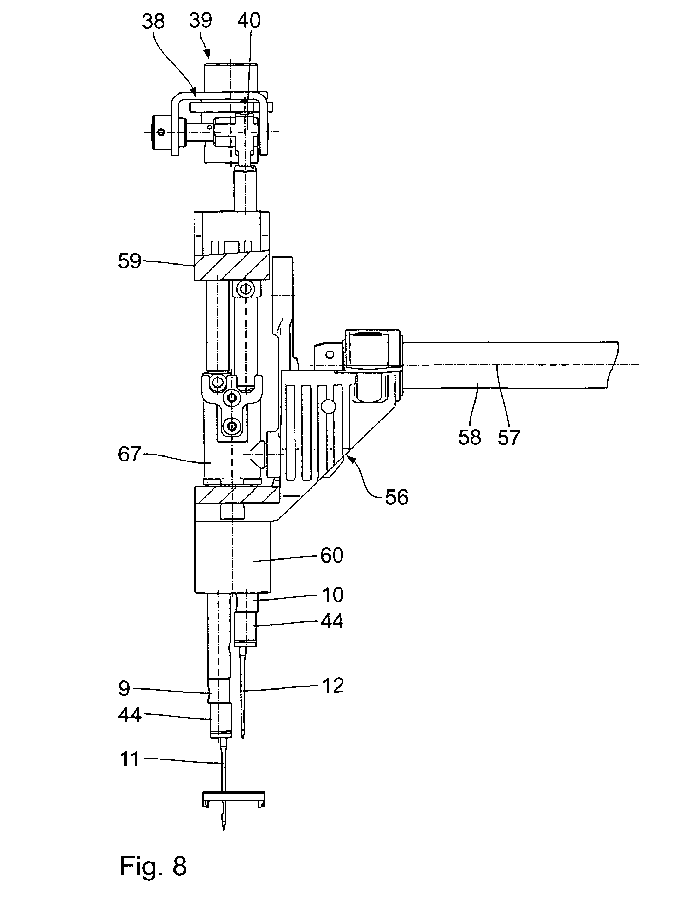

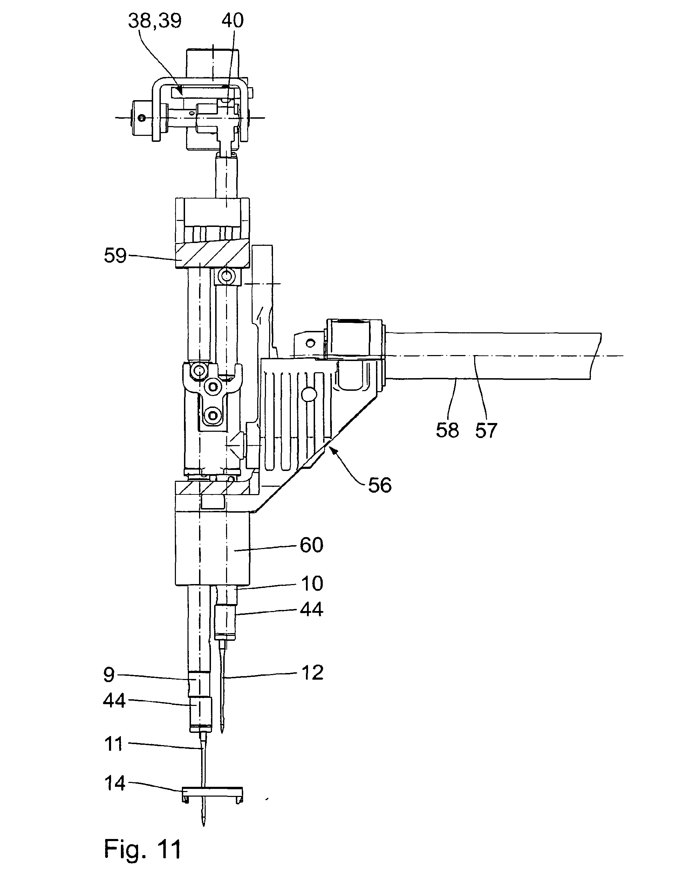

Zum wahlweisen Abschalten des Nähbetriebs einer der beiden Nadelstangen 9, 10 dient eine Schalteinrichtung 38 einer Nadelstangen-Schaltbaugruppe 39, die insgesamt in den Figuren 3 bis 7 und in Details zudem in den Figuren 8 bis 16 dargestellt ist. Mit der Schalteinrichtung 38 kann zwischen drei Betriebszuständen der Nähmaschine 1 gewechselt werden. In einer Stellung der Schalteinrichtung 38, die in den Figuren 3 bis 5 dargestellt ist, sind beide Nadelstangen 9, 10 eingeschaltet, nehmen also am Nähbetrieb teil. In der Stellung der Schalteinrichtung 38, die in den Figuren 6 bis 12 dargestellt ist, ist die linke Nadelstange 9 eingeschaltet, nimmt also am Nähbetrieb teil, und die rechte Nadelstange 10 ist ausgeschaltet, verbleibt also in einer Ruhestellung im Bereich eines oberen Totpunktes. Entsprechend kann über die Schalteinrichtung 38 auch eine dritte Betriebsstellung herbeigeführt werden, bei der die rechte Nadelstange 10 eingeschaltet und die linke Nadelstange 9 ausgeschaltet vorliegt.

In ihrer grundsätzlichen Funktionsweise ist eine derartige Schalteinrichtung bekannt aus der DE-PS 955 023.

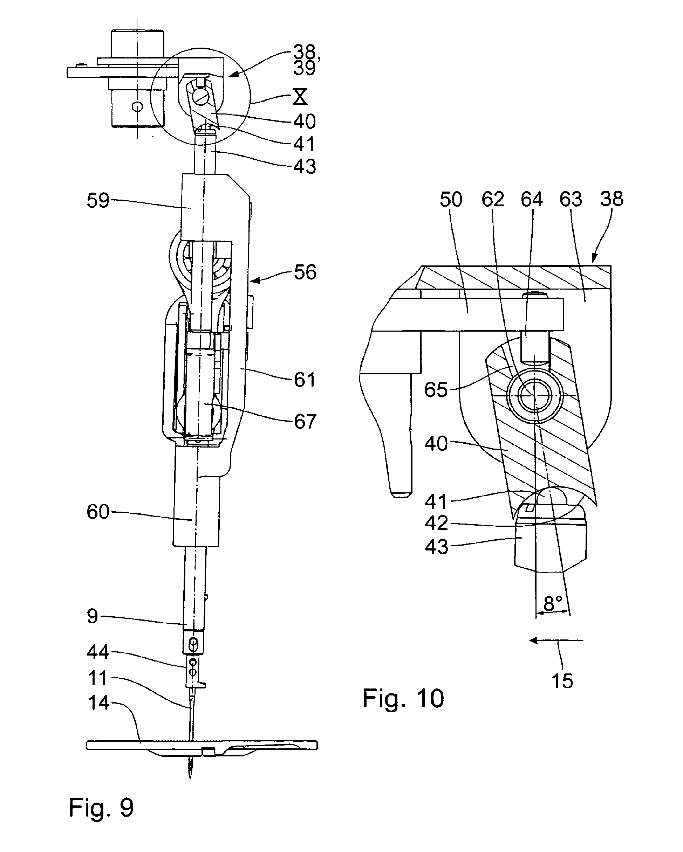

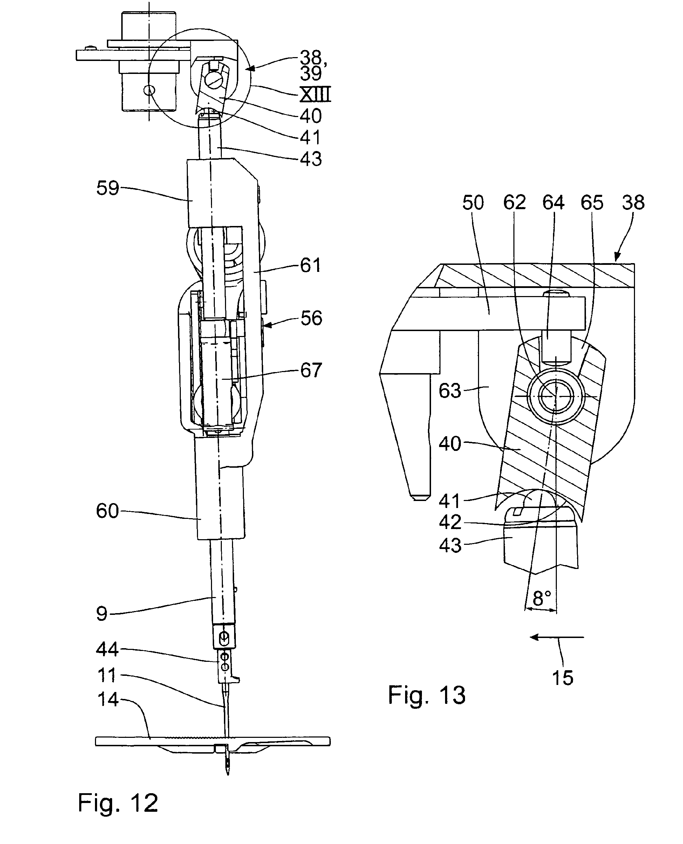

Zum Umschalten der Schalteinrichtung 38 zwischen diesen drei Betriebsstellungen dient ein Schaltnocken 40. In der Betriebsposition, in der beide Nadelstangen 9, 10 eingeschaltet sind, liegt der Schaltnocken 40 zwischen zwei Schaltstiften 41, die jeweils am oberen Ende der beiden Nadelstangen 9, 10 angeordnet sind. In der jeweiligen Ausschaltstellung der Schalteinrichtung 38, bei der jeweils eine der beiden Nadelstangen 9, 10 ausgeschaltet ist, wirkt der Schaltnocken 40 über eine untere Schalt-Wirkfläche 42 (vergleiche Figuren 10 und 13) mit dem Schaltstift 41 an einem Schaltende 43 der jeweiligen Nadelstange zusammen. Zum Verlagern des Schaltnockens 40 zwischen seinen verschiedenen Schaltstellungen dient ein manuell betätigbares Betätigungselement 45 (vergleiche Figur 3), das einen Schalthebel 46 und einen Rückstellhebel 47 aufweist. Das Betätigungselement 45 ist mechanisch mit dem Schaltnocken verbunden über eine Horizontalwelle 48, ein Schaltgestänge 49 und einen Einrückhebel 50 (vergleiche Figur 10). Im Bereich einer Anlenkung des Schaltgestänges 49 an der Horizontalwelle 48 ist eine Rückstellfeder 51 (vergleiche Figur 4) angeordnet, die mit einer Anschlageinheit 52, an der Federenden 53 der Rückstellfeder 51 anschlagen, zusammenwirkt. Zur Anschlageinheit 52 gehört ein Anschlagstift 54 für die Mittelstellung des Schaltnockens 40 zwischen den beiden Schaltstiften 41.

Zur Verlagerung der Nadelstangen 9, 10 während eines Stichs längs der Nährichtung bzw. Transportrichtung 15, also zum Nadeltransport, dient eine Nadeltransporteinrichtung 55, deren nadelstangenseitige Komponenten beispielsweise in den Figuren 3 und 5 dargestellt sind. Der Nadeltransport erfolgt durch Verschwenken eines Nadelstangenträgers 56 in Form einer die beiden Nadelstangen 9, 10 außen führenden Kulisse um eine Schwenkachse 57. Die Schwenkachse 57 verläuft parallel zur Auflageplatte 13. Die Schwenkachse 57 ist vom Schaltnocken 40 um mehr als 10 mm, im dargestellten Ausführungsbeispiel um mehrere cm, beabstandet. Das Verschwenken um die Schwenkachse 57 wird angetrieben über eine längs dieser Schwenkachse 57 verlaufende Schubwelle 58. Ein nadelstangenseitiges Ende der Schubwelle 58 ist drehfest mit der Führungskulisse 56 verbunden. Letztere hat einen oberen Führungsabschnitt 59, der mit einem unteren Führungsabschnitt 60 verbunden ist. Letzterer ist wiederum über einen Betätigungsarm 61 drehfest mit der Schubwelle 58 verbunden.

Der Schaltnocken 40 ist (vergleiche Figuren 10 und 13) so ausgestaltet, dass die Schalt-Wirkfläche 42 einer aufgrund des Nadeltransports erfolgenden Pendelbewegung der Schaltenden 43 der Nadelstangen folgt. Figur 10 zeigt dabei den Schaltnocken 40 in der Nadeltransportstellung der Schaltenden 43 gegen Ende des Nadeltransportvorgangs, also in einer Stellung, bei der die nadelseitigen Enden 44 der Nadelstangen 9, 10 maximal in der Nährichtung 15 ausgelenkt sind. Figur 13 zeigt die Stellung der Schaltenden 43, die einer maximalen Auslenkung der Nadelstangen entgegen der Nährichtung 15 entspricht.

Der Schaltnocken 40 ist um eine zur Schwenkachse 57 parallele Schaltnocken-Schwenkachse 62 schwenkbar an einem gehäusefesten Schaltnockenträger 63 gelagert. Zur Schaltbetätigung des Schaltnockens 40 wirkt der Einrückhebel 50 mit dem Schaltnocken 40 über einen Mitnehmer 64, der fest mit dem Einrückhebel 50 verbunden ist, und eine im Schaltnocken 40 ausgeführte Betätigungsnut 65 zusammen. Auf diese Weise ist ein sicherer Betätigungs-Kraftschluss zwischen dem Einrückhebel 50 und dem Schaltnocken 40 unabhängig von der Schwenkstellung des Schaltnockens 40 um die Schaltnocken-Schwenkachse 62 gewährleistet.

Der Einrückhebel 50 ist mit dem Schaltgestänge 49 über eine Rückstellfeder 66 verbunden (vergleiche beispielsweise Figur 7). Die Rückstellfeder 66 gewährleistet, dass der Schaltnocken 40 bei einem seitlichen Auftreffen von diesem auf einen der Schaltstifte 41 der jeweils zu schaltenden Nadelstange 9, 10 einer Betätigungsbewegung in Richtung auf diesen Schaltstift 41 zu solange entgegen der Vorspannung der Rückstellfeder 66 ausweichen kann, bis dieser Schaltstift 41 durch eine Nähbewegung der jeweiligen Nadelstange 9, 10 sich zur Verlagerung des Schaltnockens 40 in die Schaltstellung über dem Schaltstift 41 weit genug nach unten bewegt hat.

Anhand der Figuren 3 bis 16 wird der nähere Aufbau des Kurbelantriebs 8 zur auf- und abgehenden Nähbetätigung der Nadelstangen 9, 10 deutlich. Zu diesem Kurbelantrieb 8 gehört ein auf- und abgehend antreibbarer Mitnehmer 67 in Form eines Kreuzkopfes, der in einem Nähzustand der jeweiligen Nadelstange 9, 10, der beispielsweise in der Figur 5 dargestellt ist, zwischen einem oberen Betriebsanschlag, der für jede der beiden Nadelstangen 9, 10 durch einen Anschlagsring 68 ausgebildet ist, und einem über die Schalteinrichtung 38 schaltbaren unteren Betriebsanschlag 69 an der Nadelstange 9, 10 axial festgelegt ist. Der untere Betriebsanschlag 69 ist durch jeweils drei Anschlagskugeln 70 gebildet, die bei freigegebenen Schaltstiften 41 in eine Anschlagstellung ausgerückt sind. In dieser Anschlagstellung stehen die Anschlagskugeln 70 nach außen über eine Mantelwand der zugehörigen Nadelstangen 9, 10 über, so dass ein hierdurch erzeugter Effektiv-Außendurchmesser der Nadelstange 9, 10 größer ist als ein Innendurchmesser der jeweiligen Nadelstangenführung des Kreuzkopfes 67.

Jeder der beiden Anschlagsringe 68 ist mit einer Klemmschraube axial an der zugehörigen Nadelstange 9, 10 festgelegt. Der Anschlagsring 68 stellt also einen oberen Betriebs-Anschlag für den Kreuzkopf 67 dar.

Über eine Kurbel 71 steht der Kreuzkopf 67 mit der Armwelle (vergleiche Armwellenachse 5 beispielsweise in der Figur 5) in Antriebsverbindung.

Der obere Führungsabschnitt 59 der Führungskulisse 56 hat eine untere Führungskante 72 (vergleiche beispielsweise Figur 5). Der untere Führungsabschnitt 60 der Führungskulisse 56 hat eine obere Führungskante 73. Letztere ist beabstandet unterhalb der unteren Führungskante 72 angeordnet.

Die Schalteinrichtung 38 hat einen schaltbaren unteren Ruhe-Anschlag 74 für jede der beiden Nadelstangen 9, 10, der durch Betätigung des jeweiligen Schaltstiftes 41 in eine Anschlagsposition gestellt werden kann (vergleiche Figur 16). Jeder der beiden unteren Ruhe-Anschläge 74 umfasst drei Anschlagskugeln 70 nach Art der Anschlagskugeln des unteren Betriebsanschlages 69. Die Anschlagskugeln 70 des unteren Ruhe-Anschlags 74 wirken in der Anschlagsposition, in der sie wiederum nach außen über die äußere Mantelwand der jeweiligen Nadelstange 9, 10 überstehen, mit einer innere Fase der oberen Führungskante 73 des unteren Führungsabschnitts 60 zusammen.

Im Ruhezustand, also im ausgeschalteten Zustand mit betätigtem Schaltstift 41, ist die ausgeschaltete Nadelstange 9, 10 zwischen einem oberen Ruhe-Anschlag 75 und dem schaltbaren unteren Ruhe-Anschlag 74 axial an der Führungskulisse 56 festgelegt (vergleiche Figur 16). Der obere Ruhe-Anschlag 75 ist durch den oberen Rand des jeweiligen Anschlagsrings 68 vorgegeben.

Durch Betätigung des jeweiligen Schaltstifts 41 sind die Anschlagskugeln 70 schaltbar zwischen einer versenkten Neutralposition, in der sie keine Anschlagswirkung haben und einer über die Mantelwand der jeweiligen Nadelstange 9, 10 überstehenden Anschlagsposition, in der die Anschlagskugeln 70 eine Anschlagswirkung haben. In Bezug auf den unteren Ruhe-Anschlag 74 bedeutet diese Anschlagswirkung eine Anlage der Anschlagskugeln 70 an der oberen Führungskante 73 des unteren Führungsabschnitts 60 der Führungskulisse 56. In Bezug auf den unteren Betriebsanschlag 69 bedeutet diese Anschlagswirkung eine Anlage der Anschlagskugeln 70 an einer unteren Anlagekante des Kreuzkopfes 67.

In der nach außen über die Mantelwand der jeweiligen Nadelstange 9, 10 überstehenden Anschlagstellung des unteren Betriebsanschlags 69 bzw. des unteren Ruhe-Anschlags 74 sind die Anschlagskugeln 70 federnd in Richtung der Anschlagstellung vorgespannt. Entsprechend ist der untere Ruhe-Anschlag 74 also so ausgeführt, dass er die jeweils ausgeschaltete Nadelstange 9, 10 federnd in Richtung auf den oberen Ruhe-Anschlag 75 zu vorspannt. Im Betrieb der Nadelstangen 9 und/oder 10 muss zudem gewährleistet sein, dass der obere Rand der Anschlagsringe 68 nicht an der unteren Führungskante 72 anschlägt. Damit dies gewährleistet ist, muss der Abstand der unteren Führungskante 72 des oberen Führungsabschnitts 59 der Führungskulisse 56 zum oberen Rand der Anschlagsringe 68 im oberen Totpunkt des diese mitnehmenden Kreuzkopfes 67 exakt vorgegeben sein. Es ist dann auch gewährleistet, dass der Kreuzkopf 67 bei ausgeschalteter Nadelstange 9, 10 nicht gegen den zwischen dem oberen Ruhe-Anschlag 75 und dem unteren Ruhe-Anschlag 74 verspannten Anschlagsring 68 anschlägt.

Zu dieser Abstandseinstellung dient eine Abstands-Einstelleinrichtung 76, die als Exzenter-Einstelleinrichtung ausgeführt ist, was im Detail in der Figur 15 dargestellt ist. Die Schwenkachse 57 der Schubwelle 58, die sich in der Figur 15 als Schnittpunkt zweier Hilfslinien 57a, 57b ergibt, ist um ein Exzentrizitätsmaß E horizontal von einer Horizontalposition der Armwellenachse 5 (vergleiche Hilfslinie 5a in der Figur 15) beabstandet. Über eine Einstellverdrehung der Schubwelle 58 lässt sich die Position der Führungskulisse 56 in vertikaler Richtung relativ zur Position der Nadelstangen 9, 10 und damit der Abstand der unteren Führungskante 72 des oberen Führungsabschnittes 59 der Führungskulisse 56 zur dieser zugewandten oberen Führungskante des Kreuzkopfes 67 einstellen. Dieser Abstand ist minimal größer als die Stärke der Anschlagsringe 68 in axialer Richtung längs der Nadelstange 9, 10. Bei der dargestellten Ausführung beträgt das Exzentrizitätsmaß E 0,2 mm, ist also kleiner als 1 mm.

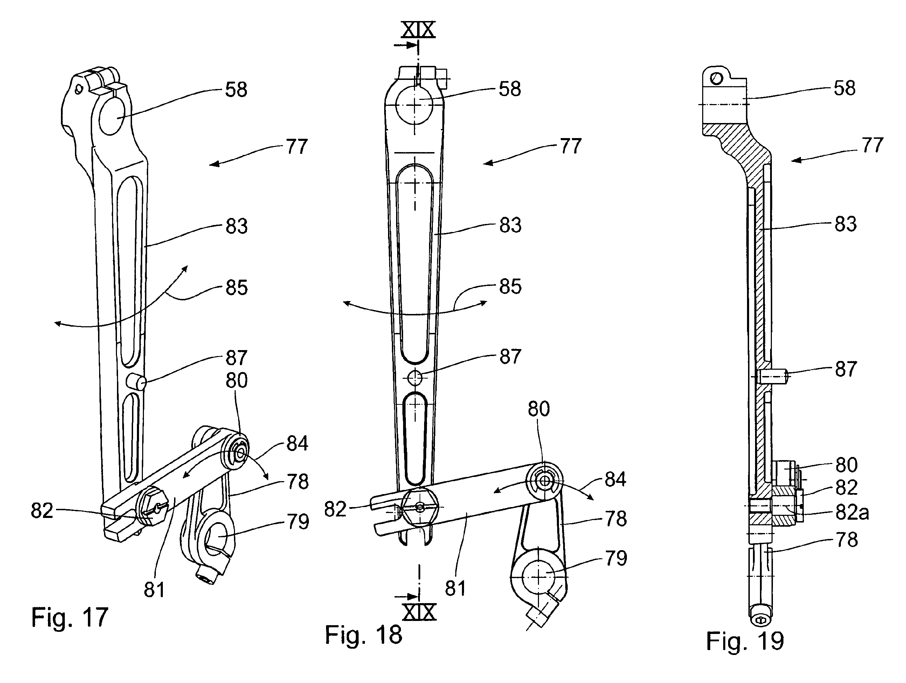

Figuren 17 bis 24 zeigen weitere Komponenten der Nadeltransporteinrichtung 55 in Form einer Hebelverbindung 77. Die Hebelverbindung 77 ist im Ständer 3 der Nähmaschine 1 untergebracht. Die Hebelverbindung 77 hat einen treibenden Hebel 78, der drehfest mit einer horizontal und parallel zur Schubwelle 58 verlaufenden Antriebswelle 79 des Stichstellergetriebes 30 verbunden ist. Über ein erstes Verbindungsgelenk 80 ist der treibende Hebel 78 mit einer Zugstange 81 verbunden. Über ein weiteres Verbindungsgelenk 82 in Form einer Gelenkschraubeneinheit ist die Zugstange 81 mit einem Nadeltransporthebel 83 gelenkig verbunden. Der Nadeltransporthebel 83 ist an seinem, einer Gelenkachse 82a (vergleiche Figur 19) des weiteren Verbindungsgelenks 82 gegenüberliegenden Ende drehfest mit der Schubwelle 58 verbunden. In der Nadeltransportstellung der Hebelverbindung 77, die in den Figuren 17 bis 19 dargestellt ist, erfolgt eine Umsetzung einer intermittierenden Bewegung der Antriebswelle 79 in eine Pendelbewegung (vergleiche Doppelpfeil 84) des treibenden Hebels 78 und entsprechend in eine Pendelbewegung (vergleiche Doppelpfeil 85) des Nadeltransporthebels 83. Entsprechend wird die Schubwelle 58 intermittierend angetrieben, so dass eine pendelnde Transportbewegung der Nadelstangen 9, 10 zwischen beispielsweise den beiden in den Figuren 9 und 12 dargestellten Transportpositionen erfolgt.

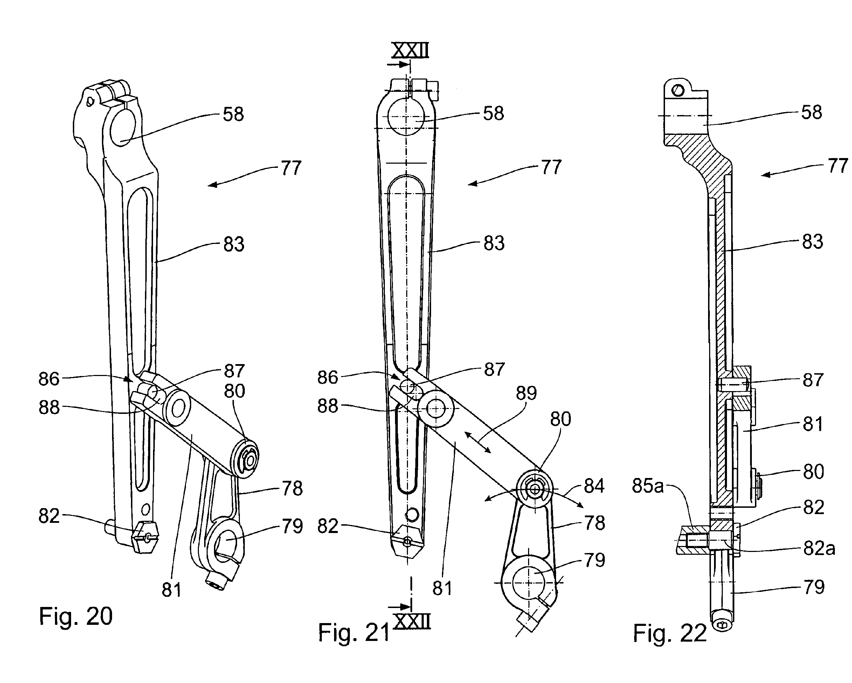

Figuren 20 bis 22 zeigen eine Neutralstellung der Hebelverbindung 77, bei der die Nadeltransporteinrichtung 55 außer Kraft ist, bei der also kein Nadeltransport erfolgt. In dieser Neutralstellung übt die Zugstange 81 keine Antriebswirkung auf den Nadeltransporthebel 83 aus, so dass dieser trotz der Pendelbewegung 84 des treibenden Hebels 78 in Ruhe bleibt. In dieser Neutralstellung ist der Nadeltransporthebel 83 über die Gelenkschraube 82 fest mit einer Rahmenkomponente 85a der Nähmaschine 1 verschraubt.

In der Neutralstellung ist die Zugstange 81 mit dem Nadeltransporthebel 83 über eine Langloch/Stift-Verbindung 86 mit einem fest am Nadeltransporthebel 83 angebrachtem Gleitstift 87 und einem an der Zugstange 81 angeformten Langloch 88 verbunden. Der Gleitstift 87 ist in den Nadeltransporthebel 83 eingepresst. Das Langloch 88 ist als Führungsgabel der Zugstange 81 ausgeführt. Aufgrund der Langloch/Stift-Verbindung 86 läuft eine Längsbewegung (vergleiche Doppelpfeil 89) der Zugstange 81 ins Leere wobei gleichzeitig die Zugstange 81 am Nadeltransporthebel 83 gesichert ist.

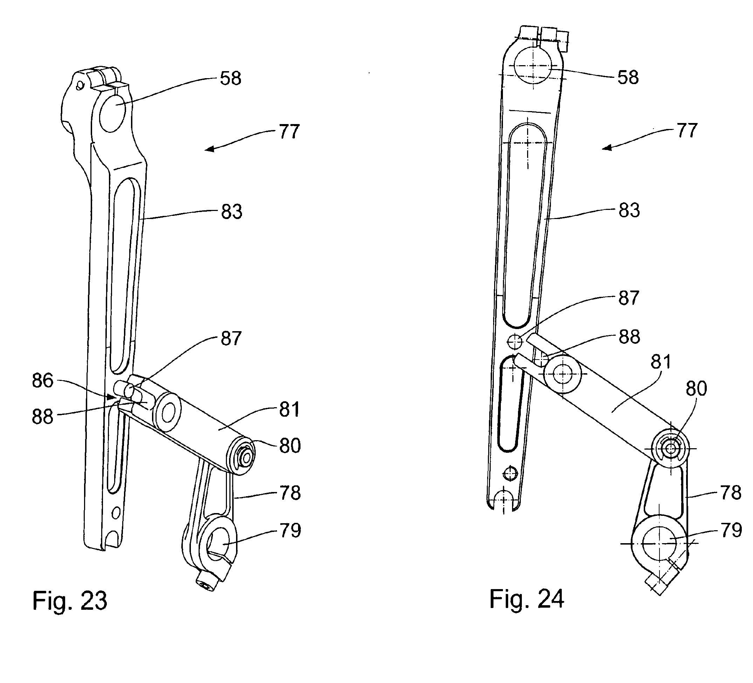

Figuren 23 und 24 zeigen eine Umstellposition der Hebelverbindung 77 zur Umstellung von dieser zwischen der Transportstellung nach den Figuren 17 bis 19 und der Neutralstellung nach den Figuren 20 bis 22. Hierbei ist die Gelenkschraubeneinheit 82 gelöst. Der Nadeltransporthebel 83 kann dann ausgehend von seiner festgelegten Position nach den Figuren 20 bis 22 in der Figur 24 im Uhrzeigersinn verschwenkt werden, bis die Montageposition nach den Figuren 23 und 24 erreicht ist. In dieser Montageposition ist der Gleitstift 87 außer Eingriff mit dem Langloch 88, so dass eine Umstellung der Zugstange 81 zwischen der in den Figuren 20 bis 24 gezeigten Neutralstellung und der in den Figuren 17 bis 19 gezeigten Transportstellung möglich ist.

Anhand der Figuren 25 bis 35 wird nachfolgend die Greifer-Baugruppe 24 erläutert, zu der neben den beiden Greifern 25, 26 noch eine Greiferantriebs-Baugruppe gehört. Die beiden Greifer 25, 26 werden jeweils von einem Greiferbock 90, 91 getragen. Der Greiferbock 90 gehört dabei zum Greifer 25 und zur Nadelstange 9 und stellt einen Teil des Greiferantriebsgehäuses 32 dar. Der Greiferbock 91 gehört zum Greifer 26 und zur Nadelstange 10 und stellt einen Teil des Greiferantriebsgehäuses 33 dar.

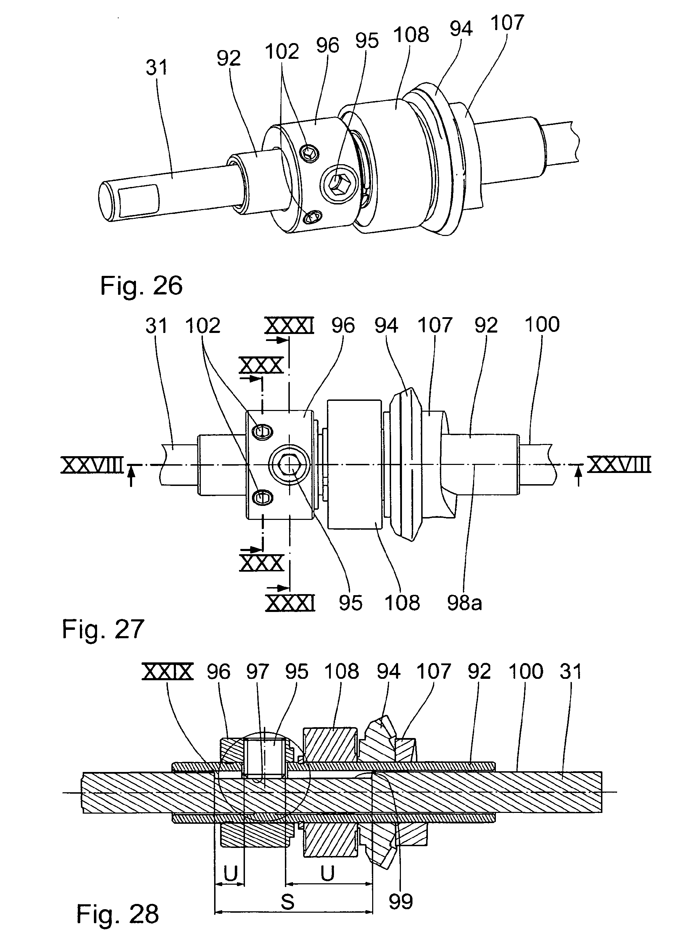

Die Figuren 26 bis 35 zeigen die Unterwelle 31 mit den hieran angebrachten Komponenten im Bereich des Greiferbocks 90. Eine entsprechende, um 180° um eine Hochachse verdreht symmetrisch hierzu ausgebildete Anordnung liegt im Bereich des Greiferbocks 91 vor.

Die beiden Greiferböcke 90, 91 sind beabstandet zueinander an der Unterwelle 31 festgelegt, die sich synchron mit der Bewegung der Nadeln 11, 12, also synchron mit der Armwelle, dreht.

Im Bereich jeweils der beiden Greiferböcke 90, 91 ist die Unterwelle 31 umgeben von jeweils einem jeweils drehfest mit der Unterwelle 31 verbundenen Hohlwellen-Abschnitt 92, 93. Über jeweils ein Kegelrad 94 (vergleiche Figuren 26 bis 28), das drehfest mit dem jeweiligen Hohlwellen-Abschnitt 92, 93 verbunden ist, steht dieser Hohlwellen-Abschnitt 92, 93 über eine Greiferantriebswelle mit dem jeweiligen Greifer 25, 26 in Antriebsverbindung. Der jeweilige Hohlwellen-Abschnitt 92, 93 dreht sich also synchron mit dem jeweiligen Greifer 25, 26.

Zur Festlegung der Greiferböcke 90, 91 an der Unterwelle 31 dient ein Klemm-Gewindestift 95, der radial durch eine dem jeweiligen Hohlwellen-Abschnitt 92, 93 umgebende Stellhülse 96 geschraubt ist. Die Stellhülse 96 weist hierzu ein radiales Innengewinde auf, das komplementär zu einem Außengewinde des Gewindestifts 95 ausgeführt ist. Jeweils eine der beiden Stellhülsen 96 ist einem der beiden Greiferböcke 90, 91 zugeordnet und an diesem festgelegt.

Ein Klemmabschnitt des Gewindestifts 95 mit endseitiger Klemmfläche 97 ist durch eine Durchbrechung 98 des jeweiligen Hohlwellen-Abschnitts 92, 93 hindurchgeführt. Ein Vergleich der Figuren 28 einerseits und 31 bis 33 andererseits zeigt, dass die Durchbrechung 98 dem jeweiligen Hohlwellen-Abschnitt 92, 93 kein axiales Spiel, wohl aber ein Spiel in Umfangsrichtung um eine Unterwellenachse 98a ermöglicht.

Die Klemmfläche 97 liegt an einer komplementär zu dieser ausgeführten Gegenfläche 99 an, die in einer Mantelwand 100 der Unterwelle 31 beispielsweise als plane Fräsung ausgeführt ist. Alternativ zu einer planen Ausführung kann die Gegenfläche 99 auch beispielsweise als V-Nut ausgebildet sein. In jedem Fall ist die Gegenfläche 99 nicht rotationssymmetrisch zur Drehachse 98a der Unterwelle 31 ausgeführt.

Die Stellhülse 96 ist Teil einer Befestigungseinrichtung 101 zur Beibehaltung einer Umfangs-Relativposition des jeweiligen Hohlwellen-Abschnitts 92, 93 um die Drehachse 98a zum Klemm-Gewindestift 95 auch bei von der Gegenfläche 99 gelöster Klemmfläche 97 des Klemm-Gewindestifts 95.

Die Befestigungseinrichtung 101 umfasst neben der Stellhülse 96 zwei weitere Klemm-Gewindestifte 102. Diese stellen ein Sicherungsmittel dar, das die Stellhülse 96 in ihrer Umfangs-Relativposition zum jeweiligen Hohlwellen-Abschnitt 92, 93 sichert. Die beiden Klemm-Gewindestifte 102 sind jeweils durch ein Innengewinde der Stellhülse 96, das zum Außengewinde des jeweiligen Klemm-Gewindestifts 102 komplementär ist, hindurchgeführt. Eine endseitige Klemmfläche 103 der Klemm-Gewindestifte 102 liegt an einer äußeren Mantelwand 104 des jeweiligen Hohlwellen-Abschnitts 92, 93 an. Benachbart zu dem Bereich, an dem der jeweilige Klemm-Gewindestift 102 gegen den jeweiligen Hohlwellen-Abschnitt 92, 93 klemmt, ist in dem jeweiligen Hohlwellen-Abschnitt 92, 93 eine Wandstärkenverjüngung in Form eines Einstichs 105 ausgeführt.

Die Gegenfläche 99 hat längs der Drehachse 98a der Unterwelle 31 eine Erstreckung, die in der Figur 28 mit S bezeichnet ist. Bei der in der Figur 28 dargestellten axialen Relativstellung des Klemm-Gewindestifts 95 zur Unterwelle 31 steht die Gegenfläche 99 axial über dem Klemm-Gewindestift 95 nach links und nach rechts jeweils um einen möglichen axialen Verschiebeweg U über. Auf axialer Höhe des Klemm-Gewindestifts 95 haben die Hohlwellen-Abschnitte 92, 93 jeweils eine innere Wandstärkenverstärkung in Form eines umlaufenden Bundes 105a.

Durch Lösen des jeweiligen Klemm-Gewindestifts 95 kann der zugehörige Greiferbock 90, 91 axial relativ zur Unterwelle 31 verschoben werden, so dass insbesondere der Abstand der beiden Greiferspitzen 27 zueinander eingestellt werden kann. Aufgrund der Beibehaltung der Umfangsposition des Klemm-Gewindestifts 95 zur Unterwelle 31 während dieses Verstellvorgangs wegen der komplementär zueinander ausgeführten Flächen 97, 99 verändert sich bei diesem Verstellvorgang, da der jeweilige Hohlwellen-Abschnitt 92, 93 über die Stellhülse 96 und die beiden weiteren Klemm-Gewindestifte 102 fest mit dem Klemm-Gewindestift 95 verbunden ist, die Umfangs-Relativposition des jeweiligen Hohlwellen-Abschnitts 92, 93 zur Unterwelle 31 nicht. Damit ist auch nach einer Verstellung eines Abstands zwischen den beiden Greiferböcken 90, 91 und dem Festziehen des Klemm-Gewindestifts 95 eine Synchronisation der Greiferspitzen 27 mit einem Schleifenhub der Nadelstangen 9, 10 zur korrekten Oberfadenerfassung gewährleistet.

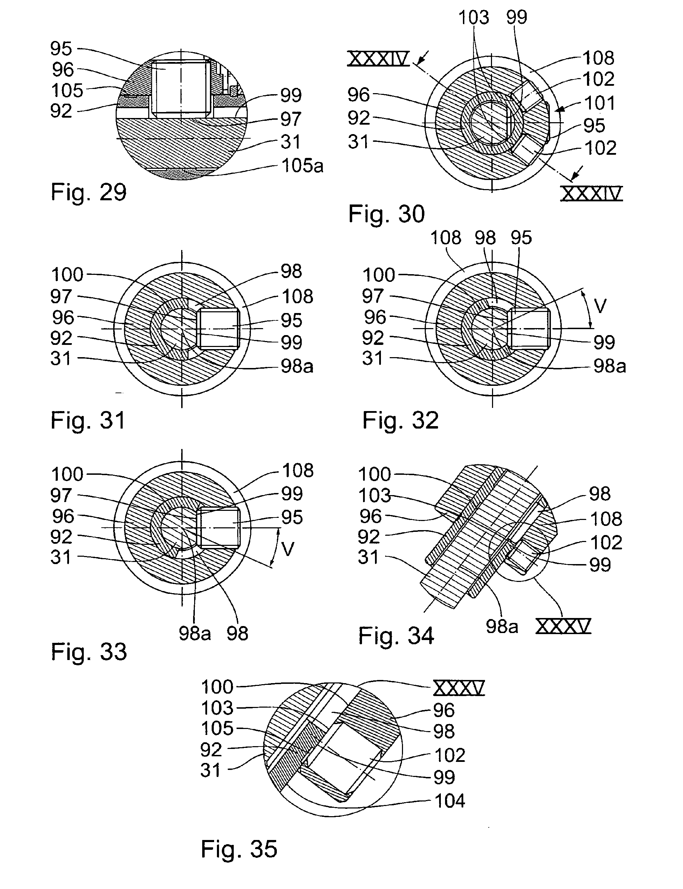

Zur Schleifenhub-Einstellung kann, wie in den Figuren 32 und 33 gezeigt, der jeweilige Hohlwellen-Abschnitt 92 um die Drehachse 98a, ausgehend von einer Mittelstellung nach Figur 31 verstellt werden. Figur 32 zeigt eine derartige Verstellung um einen Umfangswinkel V in einer ersten Umfangsrichtung und Figur 33 eine Gegenverstellung um den gleichen Betrag V in Umfangs-Gegenrichtung. Je nach dem Verstellbetrag V kann eine Synchronisation der Greiferspitze 27 zur Schleifenhubstellung der zugehörigen Nadelstange 9, 10 verändert und damit eingestellt werden.

Der Einstich 105 verhindert einen reibschlüssigen Kontakt der Klemmfläche 103 des jeweiligen Klemm-Gewindestifts 102 im äußeren Randbereich der Klemmfläche 103 und verhindert damit eine unbeabsichtigte Verdrehung des jeweiligen Hohlwellen-Abschnitts 92, 93 zur Unterwelle 31 beim Festziehen des Klemm-Gewindestifts 102.

Vor einem Verlagern des jeweiligen Greiferbocks 90, 91 werden noch Befestigungsschrauben 106 gelöst, mit denen die Greiferböcke 90, 91 rahmenseitig mit der Grundplatte 4 verschraubt sind.

Am jeweiligen Hohlwellen-Abschnitt 92, 93 ist neben dem Kegelrad 94 jeweils noch eine Kapsellüfter-Kurvenscheibe 107 angebracht.

Im Bereich der Greiferböcke 90, 91 ist die Unterwelle 31 jeweils über ein Lager 108 gelagert.

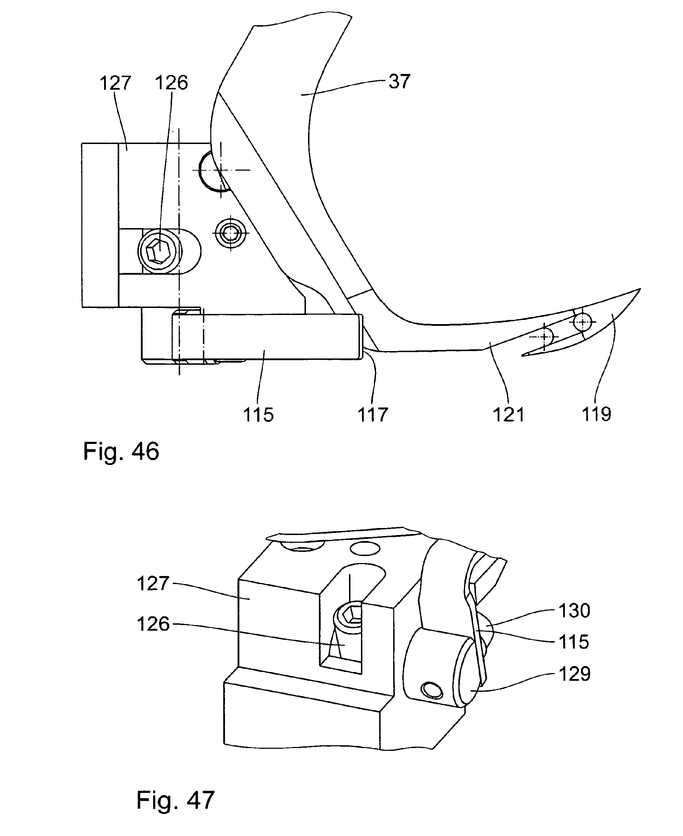

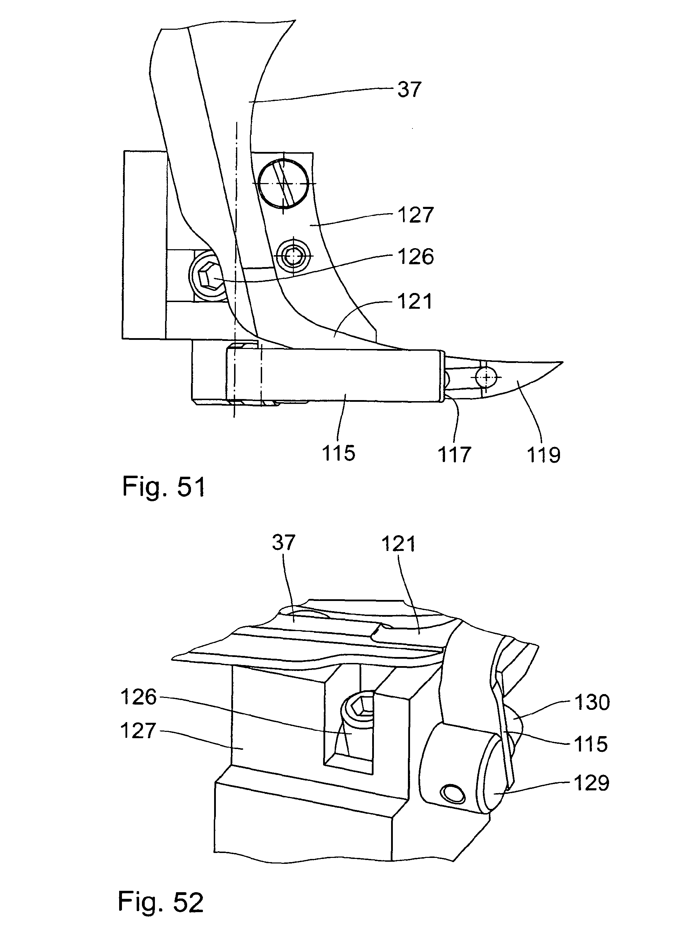

Figuren 36 bis 59 zeigen die Fadenabschneider-Baugruppe 34 komplett oder in Unterbaugruppen. Eine Schneidbewegung des Fadenziehmessers 37 wird in aktivierter Stellung des Hubmagneten 36 durch Abrollen eines Folgekörpers 109 auf einer Schneidkurve 110 des Schneidkurvenkörpers 35 bewirkt. Der Folgekörper 109 steht über ein Übertragungsglied 111 einerseits mit einem Hubstempel 112 des Hubmagneten 36 und andererseits mit dem Fadenziehmesser 37 in Wirkverbindung (vergleiche Figur 36). Das Übertragungsglied 111 ist gehäusefest gelagert, so dass es eine Drehbewegung um einen Wellenabschnitt 113 des Übertragungsglieds 111 durchführen kann.

Zu einer Fadenschneidvorrichtung 114 der Fadenabschneider-Baugruppe 34 gehört neben dem Fadenziehmesser 37, das ein bewegliches Fadenschneidmesser darstellt, ein fest über den jeweiligen Greiferbock 90, 91 am Rahmen der Nähmaschine 1 festgelegtes Gegenmesser 115.

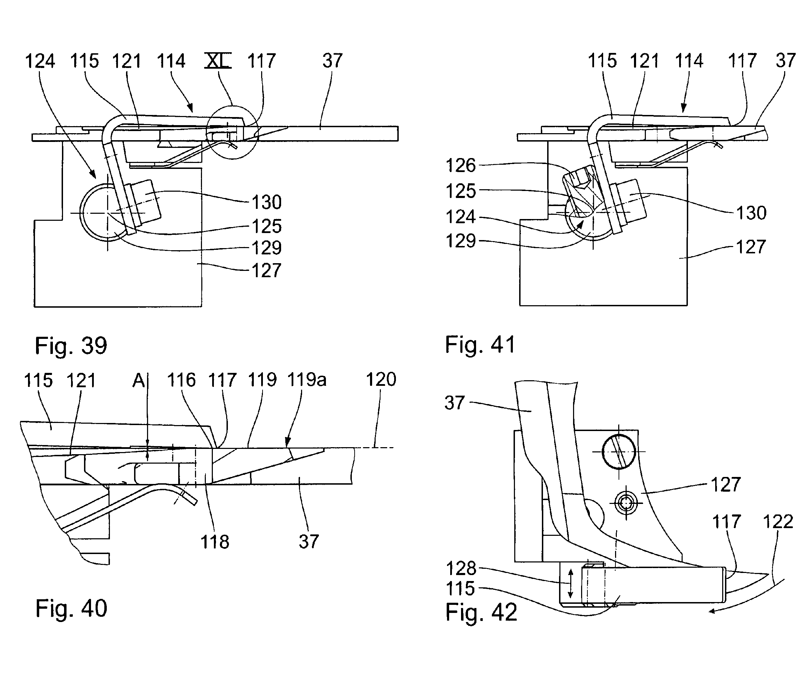

Die Figuren 39 und 40 zeigen die Fadenschneidvorrichtung 114 unmittelbar nach erfolgtem Fadenschneiden. Eine Schneidkante 116 des Fadenziehmessers 37 wirkt beim Fadenschneiden mit einer Gegenkante 117 des Gegenmessers 115 zusammen. Die Schneidkante 116 ist einerseits begrenzt durch eine Fangnut 118 des Fadenziehmessers 37 und andererseits durch einen Schneid-Wandabschnitt 119 einer oberen Fadenziehmesserwand 119a des Fadenziehmessers 37, der mit einer Bewegungsebene 120 (vergleiche Figur 40) des Fadenziehmessers 37 bei der Schneidbewegung von diesem zusammenfällt. Jenseits der Schneidkante 116, also auf der dem Schneid-Wandabschnitt 119 gegenüberliegenden Seite, geht die Fadenziehmesserwand 119a in einen von der Bewegungsebene 120 beabstandeten Abstands-Wandabschnitt 121 über. Der Abstands-Wandabschnitt 121 ist durch einen Hohlschliff der oberen Fadenziehmesserwand 119a gebildet. Aufgrund des Abstands-Wandabschnitts 121 kommt beim Fadenschneiden das Fadenziehmesser, das sich entsprechend dem Bewegungspfeil 122 in der Figur 42 beim Fadenschneiden bewegt, erst benachbart zur Schneidkante 116 mit dem Gegenmesser 115 in Kontakt.

Ein Abstand A des Abstands-Wandabschnitts 121 zur Bewegungsebene 120 (vergleiche Figur 40) nimmt mit steigendem Abstand des Abstands-Wandabschnitts 121 zur Schneidkante 116 im mathematischen Sinn streng monoton zu.

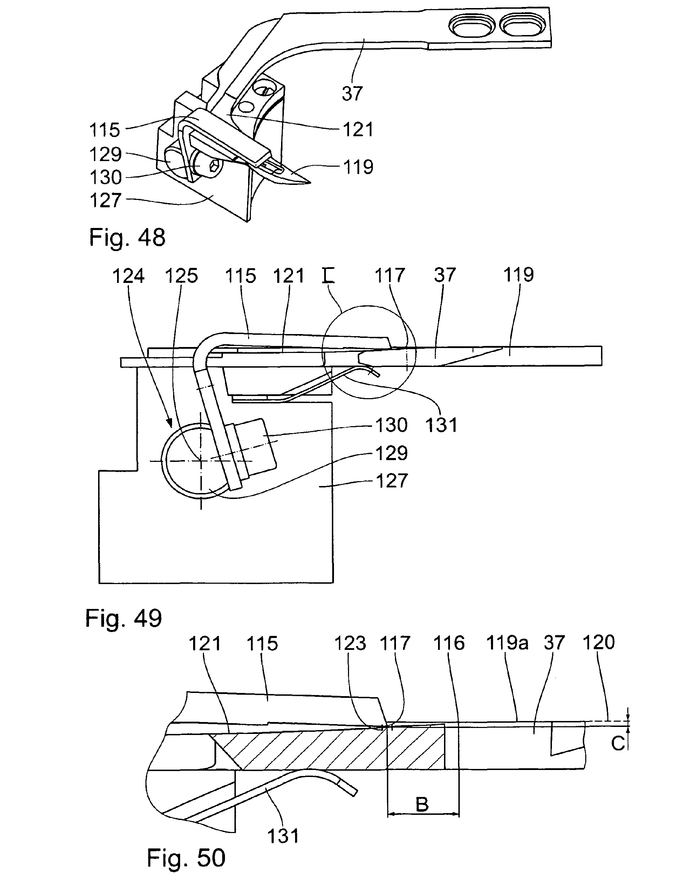

Auf dem Abstands-Wandabschnitt 121 ist ein der Schneidkante 116 benachbarter Einstellbereich 123 vorgesehen (vergleiche Figur 50). Dieser ist in der Figur 50 durch zwei senkrechte kurze Grenzlinien, die vom Abstands-Wandabschnitt 121 nach unten ausgehen, angedeutet. Ein Abstand B des Einstellbereichs 123 von der Schneidkante 116 (vergleiche Figur 50) ist so bemessen, dass eine korrekte Schneidkraft, also ein korrekter Schneiddruck, den das Fadenziehmesser 37 gegen das Gegenmesser 115 beim Fadenschneiden an der Schneidkante 116 ausübt, dann vorliegt, wenn das Fadenziehmesser 37 im Einstellbereich 123 kräftefrei, also ohne Druckausübung, am Gegenmesser 115 anliegt. Der Einstellbereich 123 ist auf der oberen Fadenziehmesserwand 119a durch eine Lasermarkierung markiert. Ein für das Fadenschneiden korrekter Schneiddruck baut sich aufgrund einer Überschneidung C (vergleiche Figur 50) zwischen einer Höhe der Gegenkante 117 im Einstellbereich 123 und einer Höhe der Schneidkante 116 auf.

Zur Schneidkrafteinstellung ist das Gegenmesser 115 zwischen Gegenmesserstellungen mit unterschiedlichem Abstand der Gegenkante 117 zur Bewegungsebene 120, also mit unterschiedlichen Überschneidungen C, verlagerbar. Hierzu ist das Gegenmesser 115 um ein Schwenkgelenk 124 mit Schwenkachse 125 zwischen verschiedenen Schwenkstellungen verlagerbar und zur Fixierung einer vorgegebenen Schneidkraft über eine Feststellschraube 126, also über eine Schneidkraft-Einstellschraube, fixierbar. Die Feststellschraube 126 dient gleichzeitig zur Fixierung des Gegenmessers 115 an einem Gegenmesserträger 127 und damit über den jeweiligen Greiferbock 90, 91 am Rahmen der Nähmaschine 1. Über ein Lösen der Feststellschraube 126 ist gleichzeitig eine Relativpositionierung des Gegenmessers 115 relativ zum Gegenmesserträger 127 längs einer Bewegungsrichtung möglich, die in der Figur 42 durch einen Doppelpfeil 128 verdeutlicht ist. Über die Positionsvorgaberichtung 128 kann also eine axiale Relativposition des Gegenmessers 115 längs der Schwenkachse 125 erfolgen.

Das Schwenkgelenk 124 hat eine Gelenkwelle mit Gelenkachse 129. An dieser ist das Gegenmesser 115 über eine Befestigungsschraube 130 festgelegt.

Zur Schneidkrafteinstellung wird die Feststellschraube 126 zunächst gelöst. Dann wird das Fadenziehmesser 37 relativ zum Gegenmesser 115 so verlagert, bis die Gegenkante 117 dem Einstellbereich 123 auf der oberen Fadenziehmesserwand 119a gegenüber liegt. Dann wird das Gegenmesser 115 so lange um die Schwenkachse 125 verschwenkt, bis die Gegenkante 117 mittig im Einstellbereich 123 an der oberen Fadenziehmesserwand 119a ohne Vorspannung anliegt. Dann wird bei Beibehaltung dieser Gegenmesserposition die Feststellschraube 126 angezogen.

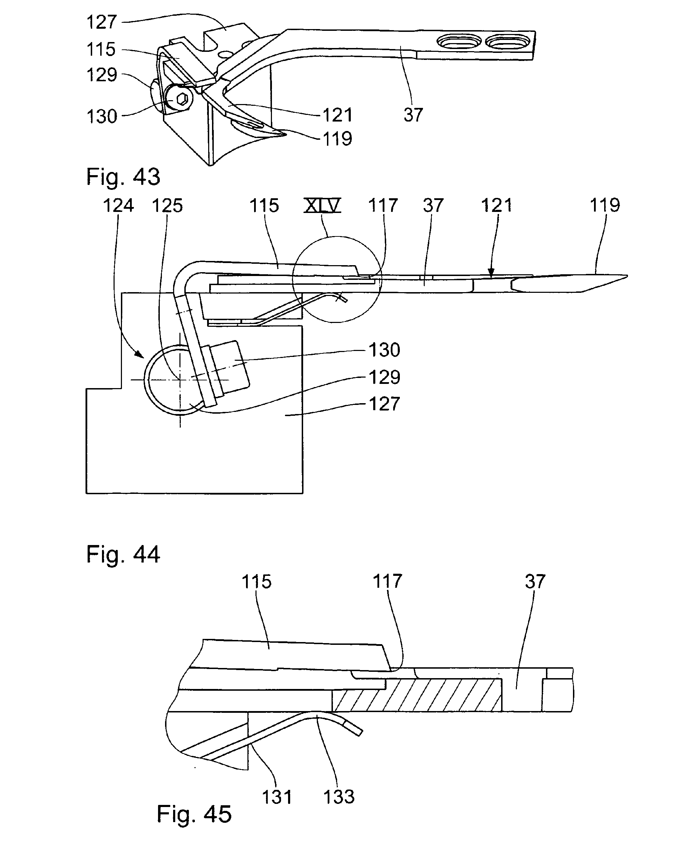

Beim Fadenschneiden liegt das Fadenziehmesser 37 zunächst in der in den Figuren 43 bis 47 dargestellten Position vor. Aufgrund des Hohlschliffs im Bereich des Abstands-Wandabschnitts 121 kommt das Fadenziehmesser 37 zunächst nicht in Kontakt mit dem Gegenmesser 115. Dies gilt auch für den Beginn der Fadenschneidbewegung des Fadenziehmessers 37, bis das Fadenziehmesser 37 sich relativ zum Gegenmesser 115 soweit verlagert hat, dass das Fadenziehmesser 37 im Einstellbereich 123 mit dem Gegenmesser 115 in Kontakt kommt. Bei der weiteren Bewegung des Fadenziehmessers 37 baut sich aufgrund der Überschneidung C dann die vorgegebene Schneidkraft auf, so dass dann, wenn die Schneidkante 116 des Fadenziehmessers 37 an der Gegenkante 117 des Gegenmessers 115 vorbeiläuft, ein korrektes Fadenschneiden erfolgt.

Der Hohlschliff des Abstand-Wandabschnitts 121 führt zu einer Leichtgängigkeit des ersten Bewegungsabschnitts des Fadenziehmessers 37 bei der Schneidbewegung.

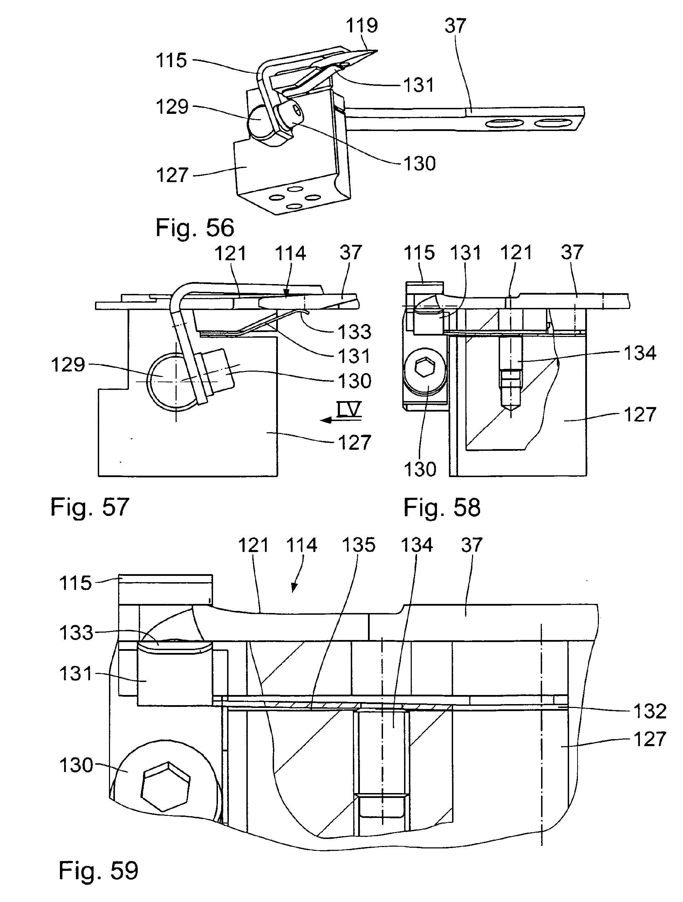

Die Fadenschneidvorrichtung 114 hat neben dem Fadenziehmesser 37 und dem Gegenmesser 115 noch eine aus einem elastischen Material beispielsweise aus Federstahl, ausgeführte Fadenklemme 131. Diese wirkt mit dem Fadenziehmesser 37, das einen Gegenkörper darstellt, zum Klemmen eines zwischen dem Fadenziehmesser 37 und dem Gegenmesser 115 abgeschnittenen Fadens zusammen. Die Fadenklemme 131 ist als Blattfeder ausgeführt und hat ein Halte-Federende 132 (vergleiche Figur 59), mit dem die Fadenklemme 131 am Gegenmesserträger 127, der insoweit als Tragkörper dient, festgelegt ist, und ein freies Klemm-Ende 133.

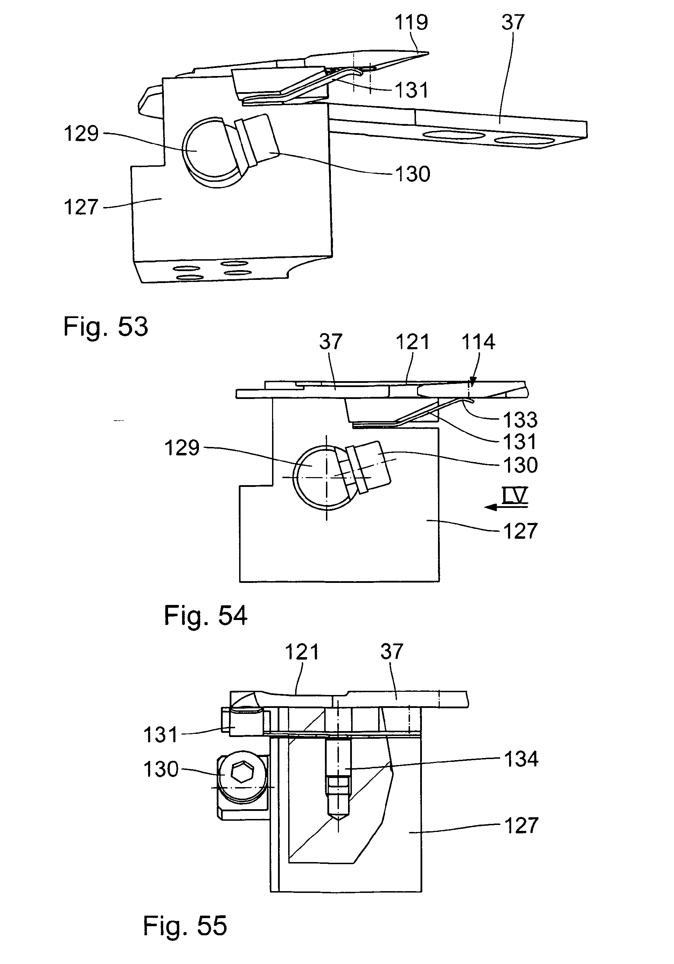

Ein Einstellelement 134, das beispielsweise in der Figur 55 dargestellt ist, dient zur Einstellung eines Klemmdrucks der Fadenklemme 131 gegen das Fadenziehmesser 37. Das Einstellelement 134 ist verlagerbar und wirkt zwischen den beiden Federenden 132, 133 einen einstellbaren Druck auf die Fadenklemme 131 aus. Das Einstellelement 134 ist als in den Gegenmesserträger 127 eingeschraubte und selbstsichernd ausgeführte Einstellschraube ausgebildet.

In der Stellung nach den Figuren 53 bis 55 ist die Einstellschraube 134 in eine Neutralstellung gestellt und ist nicht mit der Fadenklemme 131 in Eingriff. In dieser Stellung liegt das Klemm-Ende 133 der Fadenklemme 131 unter leichter Fadenspannung am Fadenziehmesser 37 an, soweit Letzteres in der Position nach dem Fadenschneiden vorliegt.

Figuren 56 bis 59 zeigen das Einstellelement 134 in Eingriff mit der Fadenklemme 131. Die Fadenklemme 131 ist zwischen dem Halte-Federende 132 und dem Klemm-Ende 133 aufgrund der Wirkung des Einstellelements 134 von einer Anlagewand 135 des Gegenmesserträgers 127 abgehoben, so dass das Klemm-Ende 133 stärker gegen das Fadenziehmesser 37 drückt, soweit Letzteres in der Position nach dem Fadenschneiden vorliegt. Über die Stärke des Eingriffs des Einstellelements 134 mit der Fadenklemme 131 lässt sich diese Vorspannung zwischen dem Klemm-Ende 133 und dem Fadenziehmesser 37 einstellen. Diese Einstellung kann in der Klemmstellung der Fadenklemme 131 relativ zum Fadenziehmesser 37 vorgenommen werden.

Figuren 60 bis 66 zeigen Details der Auflageplatte 13 im Bereich der Stichplatte 14. Die Stichplatte 14 ist an der Auflageplatte 13 und damit an der Grundplatte 4 festgelegt. Eine Oberseite der Stichplatte 14 fluchtet mit einer Oberseite der diese umgebenden Auflageplatte 13.

In der Figur 61 links und rechts neben der Stichplatte 14 sind zwei von der Auflageplatte 13 abnehmbare Stichplattenschieber 136, 137 an der Auflageplatte 13 und damit an der Grundplatte 4 festgelegt. Die Oberseiten der beiden Stichplattenschieber 136, 137 fluchten mit der Oberseite der Stichplatte 14 und mit der Oberseite der die Stichplattenschieber 136, 137 umgebenden Auflageplatte 13. Die beiden Stichplattenschieber 136, 137 stellen eine abnehmbare Abdeckung von im Grundplattengehäuse untergebrachten Komponenten der Nähmaschine, insbesondere der Greifer 25, 26 dar.

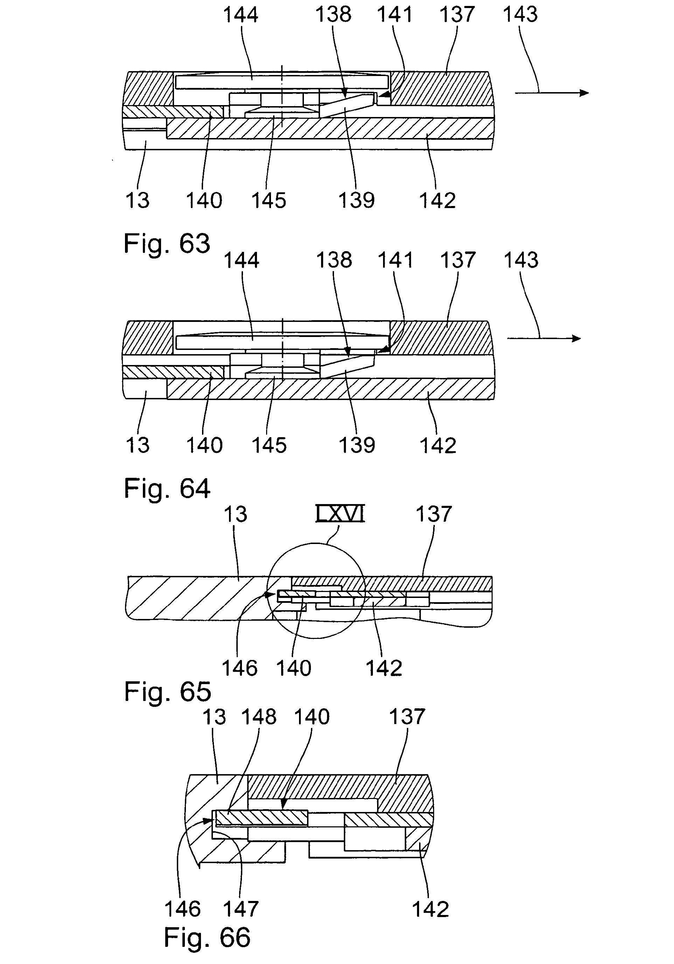

Über jeweils eine Sicherungseinrichtung 138 (vergleiche Figuren 63 und 64) sind die beiden Stichplattenschieber 136, 137 gegen eine Relativverlagerung der Stichplattenschieber 136, 137 relativ zur Auflageplatte 13 und damit relativ zur Grundplatte 4 gesichert. Die Sicherungseinrichtung 138 wird nachfolgend im Zusammenhang mit dem in der Figur 61 rechten Stichplattenschieber 137 erläutert. Punktsymmetrisch um ein Zentrum zwischen den beiden Stichlöchern 20, 21 hierzu angeordnet ist die Sicherungseinrichtung 138 für den in der Figur 61 linken Stichplattenschieber 136.

Die Sicherungseinrichtung 138 hat eine stichplattenfeste Rastnase 139, die einen einstückigen Abschnitt einer Blattfeder 140 darstellt, die am Stichplattenschieber 137 festgelegt ist. Die Blattfeder 140 ist in einer in der Figur 63 dargestellten Sicherungsstellung vorgespannt. In dieser hintergreift die Rastnase 139 einen Hinterschnitt einer Rastnut 141. Die Rastnut 141 ist Teil einer Rastplatte 141a, die über eine Befestigungsschraube 141b an der Auflageplatte 13 und damit an der Grundplatte 4 festgelegt ist. Die Blattfeder 140 ist zwischen dem Stichplattenschieber 137 und einer relativ zu diesem senkrecht zu der Oberfläche des Stichplattenschiebers 137 verlagerbaren Klemmplatte 142 untergebracht.

In der in der Figur 63 dargestellten Sicherungsstellung der Sicherungseinrichtung 138 ist ein Verschieben des Stichplattenschiebers 137 in einer Bewegungsrichtung 143, also von der Stichplatte 14 weg, nicht möglich. In der Sicherungsstellung ist der Stichplattenschieber 137 also gegen eine Relativverlagerung des Stichplattenschiebers 137 relativ zur Auflageplatte 13 und damit zur Grundplatte 4 gesichert.

Mit einer Entsicherungseinrichtung 144 kann die Sicherungseinrichtung 138 umgestellt werden zwischen der Sicherungsstellung und einer Freigabestellung, die in der Figur 64 dargestellt ist und in der eine Relatiwerlagerung in der Bewegungsrichtung 143 des Stichplattenschiebers 137 relativ zur Auflageplatte 13 und damit zur Grundplatte 4 möglich ist. In der Freigabestellung kommt, wie in der Figur 64 gezeigt, die Rastnase 139 von der Rastnut 141 frei.

Die Entsicherungseinrichtung 144 ist durch einen Entsicherungstaster ausgeführt, der von der Oberseite der Auflageplatte 13 und damit von der Oberseite der Grundplatte 4 her zugänglich ist und mit der Rastnase 139 zusammenwirkt. Diese Zusammenwirkung erfolgt indirekt, indem durch Druckausübung über den Entsicherungstaster 144 in der Figur 63 von oben her über einen Betätigungsstempel 145 die Klemmplatte 142 und damit auch die Blattfeder 140 mit der Rastnase 139 nach unten in die Freigabestellung nach Figur 64 verlagert wird. Nach dem Erreichen der Freigabestellung kann der Stichplattenschieber 137 zusammen mit dem Entsicherungstaster 144 in der Bewegungsrichtung 143 relativ zur Auflageplatte 13 und damit von der Stichplatte 14 weg verlagert werden.

Bei der Schiebebewegung des Stichplattenschiebers 137 längs der Bewegungsrichtung 143 ist diese an der Auflageplatte 13 und damit an der Grundplatte 4 über eine Führungseinrichtung 146 geführt. Letztere ist gebildet durch eine Führungsnut 147 in der Auflageplatte 13 und damit in der Grundplatte 4, in die eine Feder 148, die Teil der Blattfeder 140 ist, eingreift. Aufgrund der Federwirkung der Blattfeder 140 in der Führungseinrichtung 146 kann mit Hilfe entsprechender Einstellschrauben eine fluchtende Position der Oberseite des Stichplattenschiebers 137 relativ zur Oberseite der Auflageplatte 13 eingestellt werden.

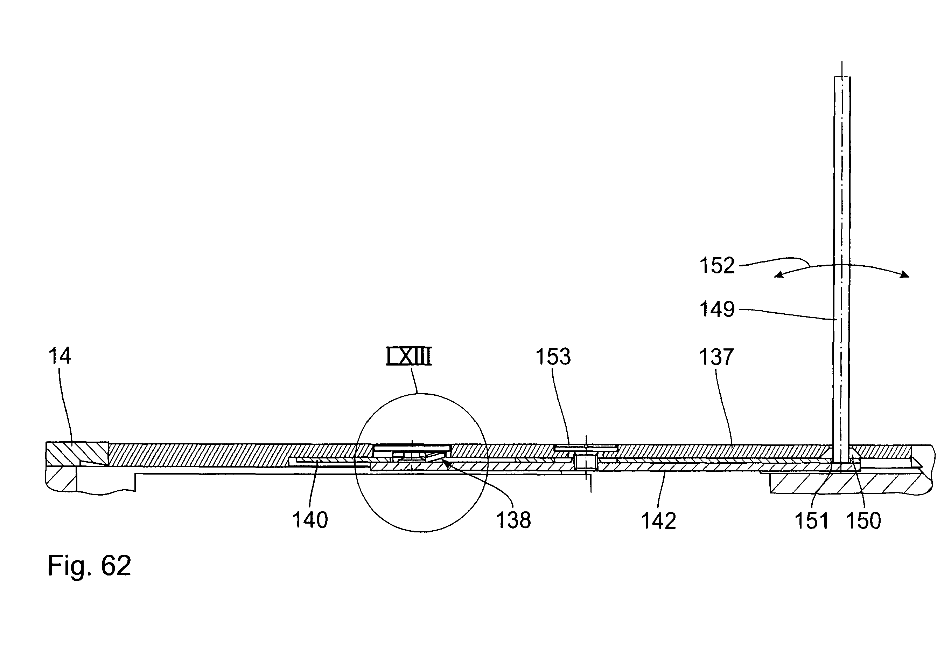

Als Hilfsmittel zur Einstellung eines Spiels zwischen der Rastnase 139 und der Rastnut 141 dient bei der werkseitigen Montage der Nähmaschine 1 ein Stift 149, der von oben her über eine Spielöffnung 150 und eine Passöffnung 151 einerseits durch den Stichplattenschieber 137 und andererseits durch die Blattfeder 140 hindurchgeführt ist. Durch eine Schwenkbewegung des Stifts 149 (vergleiche Doppelpfeil 152 in der Figur 62) kann ein Abstand der Rastnase 139 zur Rastnut 141 längs der Bewegungsrichtung 143 bei an der Stichplatte 14 anliegenden Stichplattenschieber 137 fein vorgegeben werden.

Die Klemmplatte 142 ist mit dem Stichplattenschieber 137 über Befestigungsschrauben 153 verschraubt.

## Patentansprüche

1. Fadenschneidvorrichtung (114) für eine Nähmaschine (1)
- mit einem beweglichen Fadenschneidmesser (37),
- mit einem fest an einem Nähmaschinenrahmen (4) festlegbaren Gegenmesser (115),
- mit einer aus einem elastischen Material ausgeführten Fadenklemme (131), die mit einem Gegenkörper (37) zum Klemmen eines zwischen dem Fadenschneidmesser (37) und dem Gegenmesser (115) abgeschnittenen Fadens zusamnenwirkt,
**gekennzeichnet durch**
ein Einstellelement (134) zur Einstellung eines Klenmndrucks der Fadenklemme (131) gegen den Gegenkörper (37).

2. Fadenschneidvorrichtung nach Anspruch 1, **dadurch gekennzeichnet, dass** die Fadenklemme (131) als Blattfeder ausgeführt ist und aufweist:
- ein Halte-Federende (132), mit dem die Fadenklemme (131) an einem Tragkörper (127) festgelegt ist und
- ein freies Klemm-Federende (133),
- wobei das Einstellelement (134) verlagerbar ist und zwischen den beiden Federenden (132, 133) auf die Fadenklemme (131) einen einstellbaren Druck ausübt.

3. Fadenschneidvorrichtung nach Anspruch 2, **dadurch gekennzeichnet, dass** das Einstellelement (134) als in den Tragkörper (127) eingeschraubte Einstellschraube ausgebildet ist.

4. Fadenschneidvorrichtung nach Anspruch 3, **gekennzeichnet durch** eine selbstsichernde Einstellschraube.

5. Fadenschneidvorrichtung nach einem der Ansprüche 1 bis 4, **dadurch gekennzeichnet, dass** das Fadenschneidmesser (37) als Fadenziehmesser ausgebildet ist.

6. Nähmaschine mit einer Fadenschneidvorrichtung nach einem der Ansprüche 1 bis 5.

## Claims

1. Thread cutting device (114) for a sewing machine (1)
- with a movable thread cutting blade (37)
- with a counter blade (115) which can be fixed securely to a sewing machine frame (4),
- with a thread clamp (131) made from an elastic material which works with a counter body (37) for clamping a thread cut off between the thread cutting blade (37) and the counter blade (115),
**characterised by**
an adjusting element (134) for adjusting the clamping pressure of the thread clamp (131) against the counter body (37).

2. Thread cutting device according to claim 1, **characterised in that** the thread clamp (131) is configured as a leaf spring and comprises:
- a holding spring end (132) by means of which the thread clamp (131) is secured to a support body (127) and
- a free clamping spring end (133),
- wherein the adjusting element (134) can be moved and between the two spring ends (132, 133) exerts an adjustable pressure on the thread clamp (131).

3. Thread cutting device according to claim 2, **characterised in that** the adjusting element (134) is configured as an adjusting screw screwed into the support body (127).

4. Thread cutting device according to claim 3, **characterised by** a self-locking adjusting screw.

5. Thread cutting device according to any one of claims 1 to 4, **characterised in that** the thread cutting blade (37) is configured as a thread drawing cutter.

6. Sewing machine comprising a thread cutting device according to one of claims 1 to 5.

## Revendications

1. Dispositif de coupe du fil (114) pour une machine à coudre (1)
- comprenant un couteau de coupe du fil (37) mobile,
- comprenant un contre-couteau (115) pouvant être fixé solidement à un châssis de machine à coudre (4),
- comprenant un pince-fil (131) conçu dans un matériau élastique qui agit conjointement avec un organe complémentaire (37) pour le serrage d'un fil coupé entre le couteau de coupe du fil (37) et le contre-couteau (115),
**caractérisé par**
un élément de réglage (134) pour le réglage d'une pression de serrage du pince-fil (131) contre l'organe complémentaire (37).

2. Dispositif de coupe du fil selon la revendication 1 **caractérisé en ce**
**que** le pince-fil (131) est conçu sous la forme d'un ressort à lame et présente :
- une fixation d'extrémité de ressort (132) par laquelle le pince-fil (131) est fixé sur un organe support (127), et
- une extrémité de ressort de pincement (133) libre,
- l'élément de réglage (134) pouvant être déplacé et exerçant une pression réglable sur le pince-fil (131) entre les deux extrémités du ressort (132, 133).

3. Dispositif de coupe de fil selon la revendication 2 **caractérisé en ce**
**que** l'élément de réglage (134) est conçu sous la forme d'une vis de réglage vissée dans l'organe support (127).

4. Dispositif de coupe de fil selon la revendication 3 **caractérisé par**
une vis de réglage autobloquante.

5. Dispositif de coupe de fil selon l'une des revendications de 1 à 4 **caractérisé en ce que** le couteau de coupe du fil (37) est conçu sous la forme d'un coupe fils.

6. Machine à coudre comprenant un dispositif de coupe du fil selon l'une des revendications de 1 à 5.
